# EUROPÄISCHE PATENTSCHRIFT

(11) **EP 3 105 128 B1**
(45) Veröffentlichungstag und Bekanntmachung des Hinweises auf die Patenterteilung: **28.04.2021**
(21) Anmeldenummer: 15711037.0
(22) Anmeldetag: 10.02.2015
(51) Int. Cl.: B65B 13/06, B65B 13/22

(54) **UMREIFUNGSEINRICHTUNG MIT EINER BANDVORSCHUBEINRICHTUNG**
STRAPPING DEVICE HAVING A STRIP FEED DEVICE
SYSTÈME DE CERCLAGE COMPRENANT UN DISPOSITIF D'AVANCEMENT DE BANDE

(30) Priorität: 10.02.2014 CH 181142014; 10.02.2014 CH 182142014; 10.02.2014 CH 183142014
(43) Veröffentlichungstag der Anmeldung: 21.12.2016
(73) Patentinhaber: Signode International IP Holdings LLC, Glenview, IL 60026 (US)
(72) Erfinder: HUBER, Hans, CH-5607 Hägglingen (CH); BENZ, Christian, CH-8046 Zürich (CH); MENG, Michael, CH-5073 Gipf-Oberfrick (CH); TAKIDIS, Dimitrios, CH-8600 Zürich (CH)
(74) Vertreter: Bardehle Pagenberg Partnerschaft mbB Patentanwälte Rechtsanwälte
(86) Internationale Anmeldenummer: PCT/CH2015/000016
(87) Internationale Veröffentlichungsnummer: WO 2015/117257

(56) Entgegenhaltungen:
- EP-A1- 0 603 868
- EP-A1- 1 177 978
- EP-A2- 0 095 643
- US-A- 5 379 576

## Beschreibung

Die Erfindung betrifft eine Umreifungseinrichtung einer Umreifungsvorrichtung zur Umreifung von Packgut mit einem Umreifungsband, insbesondere mit einem Kunststoffumreifungsband, die mit einer Vorschub-, Rückzugs- und Spanneinrichtung versehen ist, die mit mehreren Rädern zur Übertragung einer Vorschub-, Rückzugs- und Spannbewegung auf das Umreifungsband versehen sind, wobei zumindest eines dieser Räder mit einer Antriebseinrichtung wirkverbunden oder wirkverbindbar ist, um das zumindest ein Rad der Räder für die Vorschub-, Rückzugs- und Spannbewegung in eine Rotationsbewegung um eine Rotationsachse zu versetzen.

Derartige Umreifungsvorrichtungen, wie sie auch durch die Erfindung betroffen sind, können als stationäre Anlage ausgebildet sein, die dazu benutzt wird, größere Packgüter oder zu einer Packguteinheit zusammengestellte mehrere einzelne Packgüter mit einem oder mehreren Bandumreifungen zu versehen. Gattungsgemässe Umreifungsvorrichtungen weisen üblicherweise einen in sich geschlossenen Bandkanal auf, in dem das Band bei seiner Vorschubbewegung zur Bildung einer Bandschlaufe um das Packgut geführt ist. Innerhalb des Bandkanals kann ein sogenannter Umreifungskopf angeordnet sein, mit dem Bandbewegungs-, Bandspann- und Verschlussbildungsvorgänge am Umreifungsband ausgeführt werden. Die Bandumreifungen werden üblicherweise aus einem Band gebildet, das von einer Vorratsrolle abgezogen und als ringförmige Umreifung um das Packgut gelegt wird. Hierzu wird das Umreifungsband mit seinem freien Ende voraus in den Kanal der Umreifungsvorrichtung geschossen, der das Packgut mit Abstand portalartig oder ringförmig umgibt. Üblicherweise wird sobald das Bandende eine bestimmte Stelle im Kanal erreicht hat, das Bandende geklemmt und das Band dann wieder zurückgezogen. Als Folge davon zieht sich die Schlaufe des Umreifungsbands zu und das Band gelangt aus dem Kanal in Anlage gegen das Packgut. Anschliessend wird das Band stramm gezogen und hierbei auf das Band eine Bandspannung aufgebracht, der Bandring bzw. die Bandschlaufe mit einem Verschluss versehen und von der Vorratsrolle abgetrennt. Als Umreifungsband werden sowohl metallische Bänder als auch Kunststoffbänder eingesetzt. Die Umreifungsvorrichtungen sind üblicherweise an die mit ihnen zu verwendeten Umreifungsbandtypen angepasst, insbesondere in Bezug auf die Verbindungseinrichtung, mit der zwei abschnittsweise übereinanderliegende Bandlagen der Umreifungsbänder unlösbar miteinander verbunden werden.

Bei vorbekannten Lösungen weist die Umreifungsvorrichtung in der Regel eine Bandvorschubeinrichtung zum Vorschub des Umreifungsbands während einer Bildung einer Bandschlaufe, eine Bandrückzugseinrichtung zum Rückzug des Umreifungsbands nach Bildung der Bandschlaufe, um das Umreifungsband an das Packgut anzulegen, sowie eine Spanneinrichtung auf, mit der bei dem am Packgut anliegenden Umreifungsband eine Bandspannung steigerbar bzw. erhöhbar ist, das Band also stramm ans Packgut angelegt wird. Diese drei Funktionskomponenten sind üblicherweise mit mehreren Rollen versehen, mittels denen während der Umreifungsbildung entsprechend den auszuführenden Funktionen Bandbewegungen auf das Umreifungsband aufbringbar sind. Üblicherweise werden zur Bewegungsaufbringung Rollenpaare eingesetzt, deren Rollen auf unterschiedlichen Seiten des Bands gegen das Band anliegen und das Band zwischen sich einklemmen. Auf diese Weise kann die motorisch erzeugte Rotationsbewegung von Rollen funktionssicher als Bandvorschub-, Bandrückzug- oder als Spannbewegung auf das Umreifungsband aufgebracht werden.

Damit solche Umreifungsvorrichtungen innerhalb einer bestimmten Zeit eine hohe Anzahl an Umreifungsvorgängen ausführen können, sind die Bandbewegungen hochdynamisch und mit hohen Bandgeschwindigkeiten versehen. Dies gilt insbesondere für den Bandvorschub während der Bildung der Bandschlaufe, bei der das Band durch den in sich geschlossenen Bandkanal der Umreifungsvorrichtung geschossen wird. Gegen Ende der Bandschlaufenbildung wird das Band abrupt gestoppt. Dies geschieht üblicherweise dadurch, dass der Bandanfang gegen einen Stopp im Bandkanal auftrifft. Das Erreichen des Endes des Bandkanals wird üblicherweise detektiert und der Antrieb für den Bandvorschub gestoppt. Danach wird der Bandrückzug ausgeführt. Aufgrund der hohen Bewegungsenergie im Band während des Bandvorschubs, der Bandträgheit- und -steifigkeit, sowie dem abrupten Bandstopp, neigen Umreifungsbänder oftmals gegen Ende der Bandschlaufenbildung und vor der Ausführung des Bandrückzugs zu einer Wellenbildung in der Schlaufe des Umreifungsbands. Diese Wellenbildung im Band kann sich in den Bandabschnitt im Umreifungskopf hineinbewegen oder sich dort bilden, wobei ein Abweichen des Bands von seinem vorgesehen Verlauf, wie es durch eine Wellenbildung der Fall ist, zu Funktionsstörungen des Umreifungskopfs führen.

Aus der EP 0 095 643 A2 ist eine Vorschub- und Spanneinrichtung einer Bandumreifungsvorrichtung bekannt, die drei Rollen aufweist, mit denen die Vorschub-, Rückzugs- und Spannfunktion ausgeführt werden. Sowohl das motorisch angetriebene Spannrad als auch ein nicht angetriebenes mitlaufendes Rad sind auf einer gemeinsamen schwenkbaren Wippe angeordnet. Bei der EP 0 095 643 A2 ist vorgesehen, dass beim Vorschubvorgang und beim Rückzugsvorgang, das angetriebene Vorschubrad und ein mitlaufendes Rad das Band zwischen sich einklemmen, während das Spannrad mit Abstand zum mitlaufenden Rad angeordnet ist. Aufgrund einer steigenden Bandspannung während des Rückziehvorgangs wird das Spannrad sukzessive in Richtung auf das mitlaufende Rad geschwenkt und kommt in Anlage gegen dieses. Zu Beginn des Spannvorgangs ist somit ein Kontakt sowohl des mitlaufenden Rads mit dem schwenkbaren Spannrad als auch des mitlaufenden und ebenfalls schwenkbaren Rads mit dem Vorschieb- und Zurückziehrad gegeben. Durch den gleichzeitigen Kontakt sämtlicher drei Rollen, von denen zwei auch gleichzeitig angetrieben sind, mit dem Band, entsteht ein undefinierter Zustand. Es ist zu befürchten, dass dies die Funktionssicherheit der Vorschub- und Spanneinrichtung beeinträchtigen kann. Durch die beim Spannvorgang weiter steigende Bandspannung wird ebenfalls sukzessive und ebenfalls bandspannungsabhängig die gemeinsame Wippe des Spannrads und des mitlaufenden Rads verschwenkt, wodurch erst dann das mitlaufende Rad nicht mehr in Kontakt mit dem Vorschieb- und Zurückziehrad steht. Aus der EP 0 095 643 A2 gehen keine Maßnahmen zur Vermeidung oder zur funktionssicheren Auflösung einer sich gegen Ende des Bandvorschubvorgangs ergebenden Wellenbildung im Umreifungsband hervor.

Aus der EP 1 177 978 A1 ist eine bandaufbringende Vorrichtung bekannt. Eine Berührungsrolle ist an dem freien Ende eines Tragarms angebracht, der sich drehen kann. Ein Umschaltmechanismus dreht den Tragarm und ändert so die Neigung des Tragarms. Die Berührungsrolle wird dabei zwischen zwei Positionen bewegt. In der ersten Position wird die Berührungsrolle auf eine Vorwärtsantriebsrolle gedrückt. In der zweiten Position wird die Berührungsrolle auf eine Rückwärtsantriebsrolle gedrückt. Die Berührungsrolle und die Rückwärtsantriebsrolle sind voneinander beabstandet. Die Berührungsrolle kann in eine dritte Position bewegt werden, wo sie sowohl von der Vorwärtsantriebsrolle als auch von der Rückwärtsantriebsrolle beabstandet bleibt. In der zweiten Position kann die Berührungsrolle mit einer kleinen Kraft oder einer großen Kraft auf die Rückwärtsantriebsrolle aufgeschoben werden. Wenn die Berührungsrolle mit geringer Kraft auf die Rückwärtsantriebsrolle gedrückt wird, zieht die Rückwärtsantriebsrolle ein Band zurück. Wenn die Berührungsrolle mit der großen Kraft auf die Rückwärtsantriebsrolle gedrückt wird, spannt die Rückwärtsantriebsrolle das Band an.

Der Erfindung liegt deshalb die Aufgabe zugrunde, bei einer gattungsgemässen Umreifungsvorrichtung zur Umreifung von Packgut mit einem Umreifungsband die Funktionssicherheit hinsichtlich einer möglichen Wellenbildung im Umreifungsband zu verbessern.

Diese Aufgabe wird durch eine Umreifungseinrichtung der eingangs genannten Art gelöst, bei der ein betätigbares Mittel, mit dem zumindest ein Rad eines Räderpaars der Vorschubeinrichtung in einen Zustand schaltbar ist, in dem das Umreifungsband, ohne Übertragung einer entsprechenden motorischen Antriebsbewegung auf das Umreifungsband, in einer zur Bandvorschubbewegung entgegen gesetzten Richtung zwischen dem Räderpaar verschiebbar ist. Mit der Erfindung wird somit vorgesehen, den Zustand des Räderpaars von einem das Band zwischen sich klemmenden Zustand, der insbesondere den Bandvorschub ermöglicht, in einen Zustand zu verändern, in dem das Band sich unabhängig von einer angetriebenen Bewegung von einem Rad des Räderpaars, zwischen dem Räderpaar hindurchbewegen kann.

Vorzugsweise kann vorgesehen sein, dass mit dem betätigbaren Mittel von zumindest einem der Räder des Räderpaars ein Andruck des Rads gegen das Umreifungsband reduzierbar ist, damit das Umreifungsband in einer zur Bandvorschubbewegung entgegen gesetzten Richtung zwischen dem Räderpaar verschiebbar ist. Erfindungsgemäss wird der zur Übertragung einer motorischen Antriebsbewegung über eines der beiden Räder auf das Umreifungsband vorgesehene Klemmzustand zwischen dem Räderpaar zumindest insoweit reduziert, das zwischen dem Band und dem Räderpaar sich Schlupf oder ein vergrösserter Spalt einstellen kann. Sofern bei einer Aufhebung der Klemmwirkung ein vergrösserter Spalt zwischen den Umfangsflächen der Räder erzeugt wird, sollte dieser Spalt vorzugsweise grösser als die Banddicke sein. Die Klemmwirkung kann beispielsweise bereits dadurch reduziert werden, dass eine Druckkraft, mit der die beiden Räder gegeneinander gedrückt werden, reduziert wird, beispielsweise durch eine veränderbar einstellbare Grösse dieser Druckkraft. Eine solche Reduzierung der Klemmwirkung kann bereits ausreichend sein, damit sich ein Umreifungsband von sich aus zwischen dem Räderpaar bewegen kann.

Eine Möglichkeit zur Bewegung des Umreifungsbands zwischen den Rädern des Räderpaars kann aber alternativ auch dadurch erreicht werden, dass eine Wirkverbindung zwischen einem angetriebenen Rad und seinem Antrieb aufgehoben wird, so dass beide Räder des Räderpaars frei und ohne Haltemoment der Antriebseinrichtung drehbar sind. Eine solche Aufhebung einer Wirkverbindung kann beispielsweise mittels einer schaltbaren Kupplung im Antriebsstrang des angetriebenen Rads vorgenommen werden. Mit dieser schaltbaren Kupplung kann vorzugsweise auch die Wirkverbindung wieder hergestellt werden, um nachfolgend wieder eine Antriebsbewegung von der angetriebenen Rolle auf das Umreifungsband aufzubringen, insbesondere eine Bandrückzugsbewegung.

Durch eine freie Drehbarkeit des Räderpaars, oder zumindest Schlupf oder vorzugsweise einem ausreichend großen Spalt zwischen den Rädern, wird es dem Umreifungsband ermöglicht, überschüssige Bandlänge der Bandschlaufe unmittelbar nach oder bereits während der Entstehung der Bandschlaufe wieder zwischen dem Räderpaar hindurch abzubauen, wodurch eine Wellenbildung möglichst vermieden werden soll. Eine beginnende überschüssige Bandlänge im Umreifungskanal führt zu Stauchungen in der Bandschlaufe und damit zu Druck- und/oder Biegespannungen im Umreifungsband. Übliche Umreifungsbänder weisen eine Biegesteifigkeit auf, die solchen Bändern die Tendenz verleihen, Druck- und Biegespannungen dadurch abzubauen, dass sie sich in eine Möglichkeit ebene und geradlinig verlaufende Ausrichtung begeben. Dies wird durch die Erfindung in vorteilhafter Weise dadurch genutzt, dass durch die Schaffung einer Bewegungsmöglichkeit des Bandes zwischen dem Räderpaar hindurch, aufgrund der Bandselbstentspannung überschüssige Bandlänge sich insbesondere von alleine zwischen den Rädern wieder aus dem Bandkanal herausbewegen kann.

In einer günstigen Ausführungsform der Erfindung ist ein Rad, dessen Umfangsfläche zum Kontakt mit dem Umreifungsband vorgesehen ist, sowohl Bestandteil der Spann-, als auch der Bandvorschub- als auch der Bandrückzugseinrichtung. Ferner ist es besonders zweckmässig, dass die Rolle zur Ausführung von Überführungsbewegungen von einer ihrer Anlagepositionen in die jeweils andere Anlageposition eine angetriebene Schwenkbewegung ausführt.

In einer bevorzugten Ausführungsform der Erfindung kann das betätigbare Mittel eine Lüfteinrichtung umfassen, mittels welcher zwei als Räderpaar angeordnete Räder - insbesondere Räder der Bandvorschub- und/oder der Bandrückzugseinrichtung - zwischen denen das Umreifungsband zu einer Bewegungsübertragung klemmbar ist und von denen ein Rad motorisch rotativ um seine Drehachse antreibbar ist, in einem Abstand zueinander anordenbar sind, der insbesondere eine freie, d.h. nicht motorisch angetriebene, Bewegung des Umreifungsbands zwischen den beiden Rädern hindurch ermöglicht. Eine bevorzugte Ausführungsform der Erfindung kann somit eine Lüfteinrichtung umfassen, mit welcher zwischen einer als Gegenrolle vorgesehenen Rolle and einer zur Aufbringung einer Bandbewegung vorgesehenen motorisch angetriebenen Rolle ein im Vergleich zur Aufbringung von Bandbewegungen vergrösserter Abstand erzeugbar ist. Vorzugsweise können mittels der Lüfteinrichtung die beiden Räder in einem Abstand anordenbar sein, der größer ist als die Dicke des jeweils zwischen dem Räderpaar angeordneten Umreifungsbands.

In einer weiteren bevorzugten Ausfahrungsform der Erfindung können Mittel zur Zurückstellung von einem der beiden Räder zu einem Abstand der beiden Räder zueinander vorgesehen sein, durch den beide Räder gegen unterschiedliche Seiten des Umreifungsbands anliegen.

Mit der Erfindung ist es somit möglich und vorgesehen, den Abstand zwischen einem insbesondere zum Bandvorschub vorgesehenen Rollen- oder Räderpaar von einem zunächst geringeren Abstand zu vergrössern, um hierdurch einen Durchlass zwischen den Rädern zu schaffen, damit sich das Umreifungsband zwischen den beiden Räder entgegen der Bandvorschubrichtung bei der Bandschlaufenbildung, hindurch- und zurückbewegen kann. Hierdurch ist es ferner möglich, dass sich, in Bezug auf die Länge des Bandkanals der Umreifungsvorrichtung, überschüssige Bandlänge, die zu einer Wellenbildung führen kann, von alleine und entgegen der Bandvorschubrichtung, in Richtung auf den Bandvorrat zurückbewegen kann. Das auf das Räderpaar einwirkende betätigbare Mittel, vorzugsweise eine Lüfteinrichtung oder eine Kupplung, kann somit mit Vorteil vor allem dazu vorgesehen sein, zumindest im Wesentlichen nach der Erzeugung einer Bandschlaufe durch die Umreifungseinrichtung und zumindest im Wesentlichen vor der Ausführung des Bandrückzugs zum Anlegen der Bandschlaufe eine Wellenbildung zu vermeiden oder eine bereits sich bildende Wellenbildung im Umreifungsband wieder aufzulösen.

Ausgangspunkt für den Einsatz der Lüfteinrichtung ist vorzugsweise eine Anordnung der Rollen bzw. Räder des Räderpaars in einer Position, in der diese gegeneinander anliegen und hierbei das Band zwischen sich mit Druck gegen das Band aufnehmen. Die beiden Rollen oder Räder klemmen somit das Band zwischen sich ein, wodurch eine Rotationsbewegung von einer der beiden Räder zu einer Veschiebebewegung des Bands führt. Das in der Regel aufgrund der Bandbewegung passiv mitdrehende zweite Rad hat hierbei die Funktion einer nicht motorisch angetriebenen Gegenrolle, mit der das Band gegen das angetriebene Rad angedrückt und somit das Band zwischen den beiden Rädern eingeklemmt wird. Eine Bewegung des Bands ist deshalb nur dann möglich, wenn das angetriebene Rad eine Rotationsbewegung ausführt. Zur Erzeugung der Andruckkraft der Gegenrolle gegen das angetriebene Rad, ist die Gegenrolle üblicherweise durch ein entsprechendes Element kraftbelastet, beispielsweise durch ein Federelement, oder einen Pneumatikzylinder oder ein anderes geeignetes, eine Kraft ausübendes Element. In diesem Zustand beträgt der Spalt zwischen den beiden Rädern somit in etwa der Banddicke des jeweils zu verarbeitenden Umreifungsbands. Ein solches Räderpaar kann vorzugsweise zur Erzeugung der Bandvorschubbewegung vorgesehen sein. Das gleiche oder ein anderes Räderpaar kann auch zur Erzeugung der Bandrückzugsbewegung genutzt werden, bei der die zuvor erzeugte Bandschlaufe an das Packgut in Anlage gebracht wird. Werden für den Bandvorschub- und den Bandrückzugsvorgang zwei unterschiedliche Räderpaare vorgesehen, so kann für jedes dieser Räderpaare eine Lüfteinrichtung vorhanden sein.

Die Lüfteinrichtung kann mit zumindest einem Lüftelement versehen sein, das auf zumindest eines der beiden Räder unmittelbar oder indirekt derart einwirkt, dass sich der Abstand zwischen den beiden Rädern vergrössert. Der sich temporär durch Betätigung der Lüfteinrichtung einstellende Abstand des Umfangs der beiden Räder sollte deutlich grösser sein als die Banddicke. Vorzugsweise kann dieser Abstand und damit der sich zwischen den beiden Rädern ergebende Spalt einen Betrag aufweisen der aus einem Bereich vom ca. 1,5-fachen bis 10-fachen der Banddicke, vorzugsweise aus einem Bereich vom 2-fachen bis 8-fachen der Banddicke und besonders bevorzugt aus einem Bereich vom 3-fachen bis 7-fachen der Banddicke gewählt ist. Mit einem Spalt zwischen den beiden zusammenwirkenden Rädern in einer Grösse aus den vorstehend genannten Bereichen, kann dem Band ermöglicht werden, sich in Richtung des Bandvorrats und damit zwischen dem Räderpaar hindurch zu entspannen. Der überschüssige Bandanteil im Bandkanal führt zu den zu vermeidenden Wellenbildungen oder anderen Bandstauchungen, die wiederum zu einer zur Reduzierung der Bandlänge im Bandkanal genutzten Druck- und Biegespannung im Band der Bandschlaufe führen kann.

Der Lüftvorgang mittels der Lüfteinrichtung - oder ein Schaltvorgang des betätigbaren Mittels für eine auf sonstige Weise geschaffene Bewegungsmöglichkeit des Bands zwischen dem Räderpaar und entgegengesetzt zur Bandvorschubsrichtung - kann vorzugsweise zumindest in etwa zu einem Zeitpunkt einsetzen, zu dem der Bandvorschubvorgang gestoppt wird. Er kann jedoch auch zu einem Zeitpunkt einsetzen, zu dem der Bandvorschub noch ausgeführt wird oder nachdem er bereits beendet ist. Der Beginn des Lüftvorgangs oder der Rückbewegungsmöglichkeit für das Band erfolgt vorzugsweise zu einem vorbestimmten bzw. zu einem veränderbaren vorbestimmbaren Zeitpunkt in Bezug auf eine bestimmte Position des durch den Bandkanals geschobenen freien Bandanfangs. Die Bandumreifungsvorrichtung kann vorzugsweise Detektionsmittel aufweisen, mit denen das Erreichen einer bestimmten Position des Bandanfangs bei seiner Bewegung durch den Bandkanal detektiert wird. Auf Basis dieser Detektion kann das Detektionsmittel ein Signal generieren, das der Steuerung der Umreifungseinrichtung zugeführt wird. Die Steuerung kann als Reaktion auf dieses Signal die Bandvorschubeinrichtung stoppen, insbesondere den Antriebsmotor stoppen, der den Bandvorschub auf das Band überträgt. Ebenfalls als Reaktion auf das Signal des Detektionsmittels kann die Steuerung auch das betätigbare Mittel, insbesondere die Lüfteinrichtung einschalten, wodurch der vorgesehene Abstand und Spalt zwischen den Umfangsflächen der Räder des Räderpaars erzeugt wird, welches das Antriebsrad für den Bandvorschub beinhaltet. Der Lüftvorgang kann hierdurch auf einen optimalen Zeitpunkt gelegt werden, zu dem einerseits die Funktionssicherheit des Umreifungsvorgangs verbessert und andererseits die Zeit für einen Umreifungsvorgang aufgrund des Lüftvorgangs möglichst nicht oder höchstens nur gering verlängert wird.

Das betätigbare Mittel, insbesondere die Lüfteinrichtung, kann vorzugsweise mit einem Mittel zur Rückstellung der beiden Räder des jeweiligen Räderpaars in eine Position versehen sein, in welcher die beiden Räder gegen unterschiedliche Seiten des Umreifungsbands anliegen und das Umreifungsband somit bei einer Antriebsbewegung des angetriebenen Rads möglichst schlupffrei zwischen sich aufnehmen und antreiben kann. Das Mittel zur Rückstellung kann beispielsweise das Andruckelement sein, mittels dem die beiden Räder des Räderpaars mit einer Andruckkraft gegeneinander in Anlage gebracht werden. Mit einer solchen Ausführungsform kann ein zusätzliches Bauelement für die Funktion der Rückstellung des Gegenrads in seine Andruckposition, vermieden werden. In einer weiteren geeigneten Ausführungsform kann dieses Andruckelement ein auf die Gegenrolle wirkende Druckfeder sein. Mit Vorteil kann der Lüftvorgang - oder die auf andere Weise geschaffene Bewegungsmöglichkeit des Bands - zwischen den beiden Rollen bzw. Rädern vor der Ausführung des mit motorischer Antriebsbewegung bewirkten Bandrückzugsvorgang somit wieder aufgehoben und die beiden Rollen wieder gegeneinander - bzw. gegen das Band - in Anlage gebracht werden. Die Rückbewegungsmöglichkeit des Bands aufgrund des Schaltvorgangs - insbesondere der Lüftvorgang - erfolgt somit vorzugsweise zeitlich zwischen dem Bandvorschub- und dem Bandrückzugsvorgang. Eine zeitliche Überschneidung zwischen dem Bandvorschub- und/oder dem Bandrückzugsvorgang einerseits sowie dem Lüftvorgang andererseits ist hierbei möglich, aber nicht zwingend erforderlich.

In einer weiteren günstigen Ausgestaltung der Erfindung, kann die nicht motorisch angetriebene Gegenrolle auf einem drehbaren Exzenter angeordnet sein. Die Lüfteinrichtung kann hier auf den Exzenter einwirken, um durch Drehung des Exzenters und der Exzentrizität einen Spalt zwischen den beiden Rollen zu erzeugen, der grösser ist als die Banddicke. In einer vorteilhaften Weiterbildung der Erfindung, kann nach Abschluss des Lüftvorgangs der Exzenter wieder in dann entgegen gesetzte Richtung zurückgedreht werden, wodurch die beiden Rollen wieder das Band zwischen sich einklemmen und mit den beiden Rollen nun ein Bandrückzugsvorgang erfolgen kann. Diese bevorzugte Ausführungsform der Erfindung hat unter anderem den Vorteil, dass mittels eines Exzenters mit vergleichsweise geringem erforderlichem Bauraum, eine schnelle Bewegung der Gegenrolle zur Erzeugung eines Abstands zur angetriebenen Rolle sowie wieder eine Zustellung zur angetriebenen Rolle möglich ist. In anderen Ausführungsformen der Erfindung kann der Abstand zwischen den beiden Rollen für den Lüftvorgang selbstverständlich auch auf andere Weise erfolgen, beispielsweise durch eine Schwenkbewegung oder eine lineare Bewegung von zumindest einer der beiden Rollen.

In einer weiteren zweckmässigen Ausgestaltung der Erfindung kann vorgesehen sein, dass die Lüftbewegung durch ein linear bewegbares angetriebenes Element, wie beispielweise ein Hubkolben, erfolgt. Derartige Hubelemente, sind in vielfacher Weise und mit unterschiedlichen Antriebsprinzipien verfügbar. Mit solchen Hubelementen lässt sich deshalb die erforderliche Antriebsbewegung für die Lüfteinrichtung besonders funktionssicher erzeugen. Zudem ist es mit solchen Antriebselementen auch mit vergleichsweise geringem Aufwand möglich, bereits bestehende Umreifungsvorrichtungen mit einer Lüfteinrichtung nachzurüsten.

Schliesslich kann in einer weiteren bevorzugten Ausführungsform der Erfindung zum Kontakt mit dem Umreifungsband bei der Ausführung und Aufbringung der Vorschub-, Rückzugs- und Spannbewegung auf das Band insgesamt höchstens drei Rollen am Umreifungskopf vorgesehen sind, die im Zusammenhang mit diesen Funktionen mit dem Umreifungsband in Kontakt kommen, und die höchstens drei Rollen hierbei in unterschiedlichen Kombinationen miteinander jeweils paarweise auf beiden Seiten des Umreifungsbands in Anlage gegen das Umreifungsband bringbar sind.

Weitere bevorzugte Ausgestaltungen der Erfindung ergeben sich aus den Ansprüchen, der Beschreibung und der Zeichnung. Der Offenbarungsgehalt der Patentansprüche wird hiermit durch Bezugnahme in die Beschreibung mit aufgenommen. Die Erfindung wird anhand von in den Figuren rein schematisch dargestellten Ausführungsbeispielen nachfolgend näher erläutert, es zeigen:
- Fig. 1: eine stark schematisierte Darstellung einer erfindungsgemässen Umreifungsvorrichtung, die mit einem erfindungsgemässen Umreifungskopf versehen ist;
- Fig. 2: eine perspektivische Darstellung eines erfindungsgemässen Umreifungskopfs;
- Fig. 3: eine perspektivische Darstellung von oben des in eine Bandführung einer Umreifungsvorrichtung integrierten Umreifungskopfs aus Fig. 2;
- Fig. 4: eine Seitenansicht auf den Umreifungskopf aus Fig. 2, bei dem sich eine Komponente in einer ausgeschwenkten Serviceposition befindet;
- Fig. 5: eine perspektivische Teildarstellung des Umreifungskopfs aus Fig. 2, mit einer Darstellung der Bandantriebseinrichtung;
- Fig. 6: eine Vorderansicht auf die Bandantriebseinrichtung aus Fig. 5;
- Fig. 7: eine perspektivische Darstellung eines erfindungsgemässen Spannrads mit einer Teildarstellung der Rändelung der Umfangsfläche des Spannrads;
- Fig. 8: eine Vorderansicht auf das Spannrad aus Fig. 7;
- Fig. 9: eine Querschnittsdarstellung des Spannrads entlang einer Durchmesserlinie;
- Fig. 10: eine Komponente eines Hebelgetriebes für eine Gegenrolle der Bandantriebseinrichtung;
- Fig. 11: eine weitere Komponente des Hebelgetriebes der Gegenrolle in einer perspektivischen Darstellung;
- Fig. 12: die Komponente aus Fig. 11 in einer Vorderansicht;
- Fig. 13: eine Schnittdarstellung der Komponente aus Fig. 11 und 12;
- Fig. 14: eine explosionsartige Darstellung eines weiteren bevorzugten Ausführungsbeispiels eines Spannrads;
- Fig. 15: eine perspektivische Darstellung des Spannrads aus Fig. 14;
- Fg. 16: eine Vorderansicht des Spannrads aus Fig. 14 und 15;
- Fig. 17: eine Schnittdarstellung des Spannrads aus Fig. 14-16;
- Fig. 18: ein weiteres Ausführungsbeispiel für eine erfindungsgemässe Bandantriebseinrichtung mit einer Lüfteinrichtung in einer Teildarstellung eines Umreifungskopfs;
- Fig. 19: die Bandantriebseinrichtung aus Fig. 18 in einer Darstellung, in der eine Gegenrolle von der mit ihr zusammenwirkenden angetriebenen Rolle gefüftet ist.

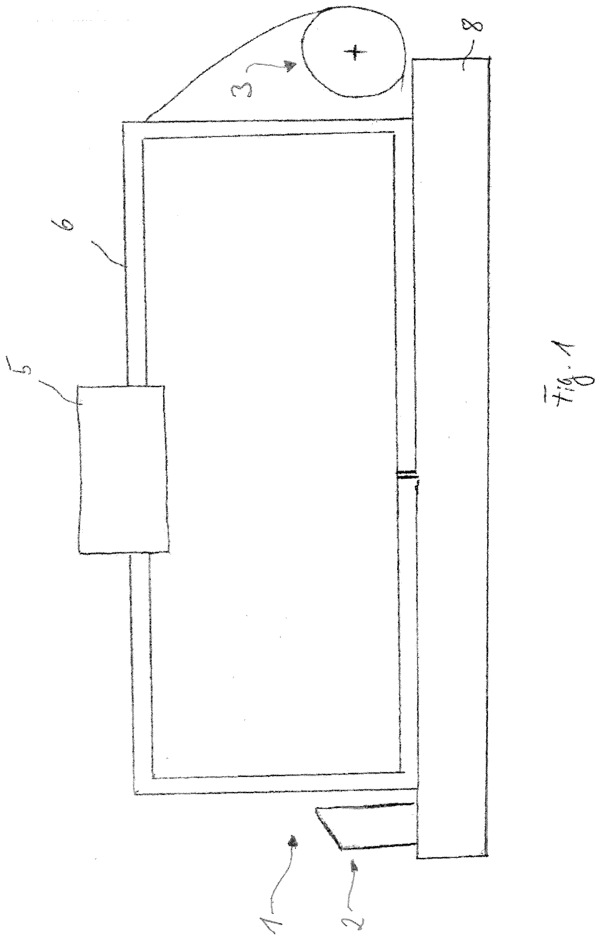

In Fig. 1 ist eine Umreifungsvorrichtung 1 gezeigt, die mit einer Steuerung 2, einer Vorratseinrichtung 3 zur Bevorratung und zum Verfügungsstellen eines Umreifungsbandes, sowie mit einem Umreifungskopf 5 versehen ist. Der Umreifungskopf 5 dient unter anderem zur Erzeugung einer Vorschub- sowie zur Erzeugung einer Rückzugsbewegung des Umreifungsbandes. Er ist ausserdem mit einer Spanneinrichtung, zur Aufbringung einer Bandspannung auf eine Bandschlaufe, sowie eine Verschlusseinrichtung zur Erzeugung eines Verschlusses am Umreifungsband, versehen. Zudem weist die Umreifungsvorrichtung eine Bandführung 6 auf, mit der das Band maschinell und automatisch auf einem vorgegebenen Weg um ein Packgut 7 gelegt werden kann. In den Umreifungskopf 5 ist zudem eine Schweiss- und Klemmeinheit 16 integriert. Bis auf den Umreifungskopf 5 handelt es sich hierbei um an sich bekannte Komponenten von Umreifungsvorrichtungen.

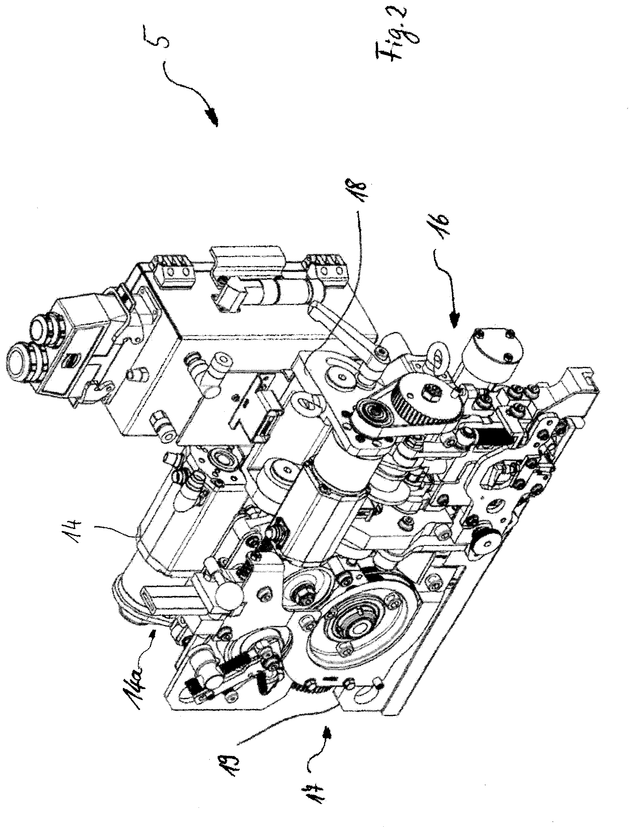

Der zusammen mit der Bandführung 6 auf einem Gestell 8 angeordnete und in Fig. 2 separat dargestellte Umreifungskopf 5 weist eine Bandantriebseinrichtung 15 auf. Bandantriebseinrichtungen sind grundsätzlich vorbekannt, weshalb nachfolgend im wesentlichen auf die Unterschiede zu vorbekannten Bandantriebseinrichtungen eingegangen wird. Die Bandantriebseinrichtung gemäss dieses Ausführungsbeispiels kann insbesondere mit einem oder mit mehreren Rollenpaaren 11, 12; 13 sowie eventuell mit weiteren einzelnen Umlenkrollen versehen sein. Letztere nehmen jedoch an der Erzeugung der Bandbewegung nicht teil und sind nur für die Bestimmung der Bandverlaufsrichtung vorgesehen. Von den im Ausführungsbeispiel drei Rollen 11, 12, 13, welche die Bandbewegungen erzeugen, sollte zumindest eine der Rollen 11, 12, 13 zur Erzeugung einer Bandvorschub- bzw. Bandrückschubbewegung motorisch angetrieben sein. Es sollte dabei vorzugsweise jeweils eine Rolle 11, 12, 13 der aus diesen Rollen gebildeten Rollenpaaren angetrieben sein, zwischen denen das Umreifungsband durchgeführt und dabei eine Vorschub-, Rückzugs- oder Spannbewegung sowie gegebenenfalls eine Entspananbewegung auf das Band übertragen wird.

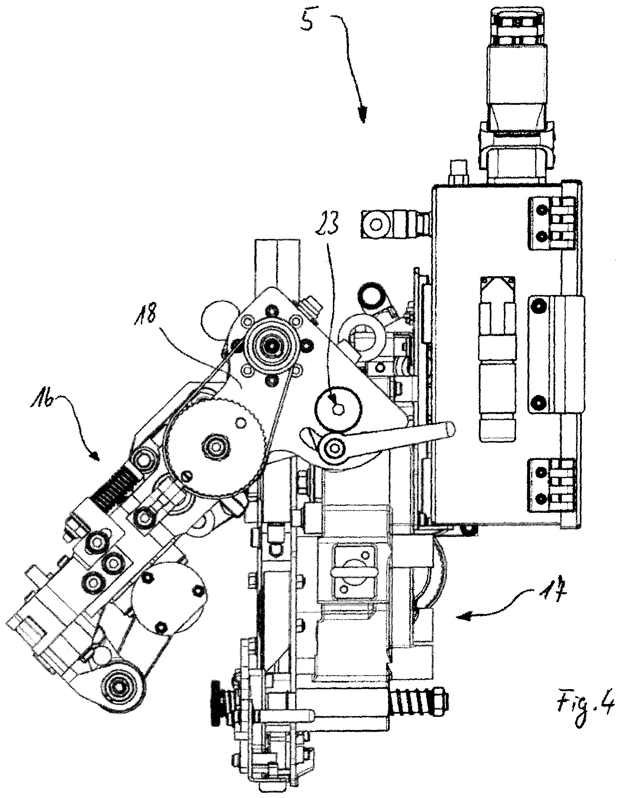

Der Umreifungskopf 5 weist zwei Komponenten auf, eine Steuerungskomponente 16 und eine Bandhandhabungskomponente 17. Im Ausführungsbeispiel hat die Steuerungskomponente 16 ausser der Ausführung von Steuerungsfunktionen für die Komponenten der Umreifungseinrichtung noch weitere Funktionen, beispielsweise die Erzeugung von Verschlüssen zwischen den zwei Bandlagen einer Umreifung sowie das Abtrennen des Umreifungsbands vom Bandvorrat. Die Steuerungskomponente 16 ist dabei auf einem Teilträger 18 des Umreifungskopfs montiert, wobei der Teilträger 18 wiederum an einem gemeinsamen Hauptträger 19 des Umreifungskopfs 5 lösbar befestigt ist. Wie insbesondere aus Fig. 4 hervorgeht, ist der Teilträger 18 der Steuerungskomponente 16 um eine Achse 23 schwenkbar. Die Elemente der Bandhandhabungskomponente 17 sind ohne eigenen Teilträger direkt am Hauptträger 19 des Umreifungskopfs befestigt. Im Ausführungsbeispiel ist die Steuerungskomponente 16 im wesentlichen zur Ausführung von Steuerungs- und Koordinierungsfunktionen der mit dem Umreifungskopf ausgeführten Funktionen vorgesehen. Die Bandhandhabungskomponente 17 und die an ihr angebrachten Komponenten sind hingegen zur unmittelbaren Einwirkung auf das Umreifungsband vorgesehen.

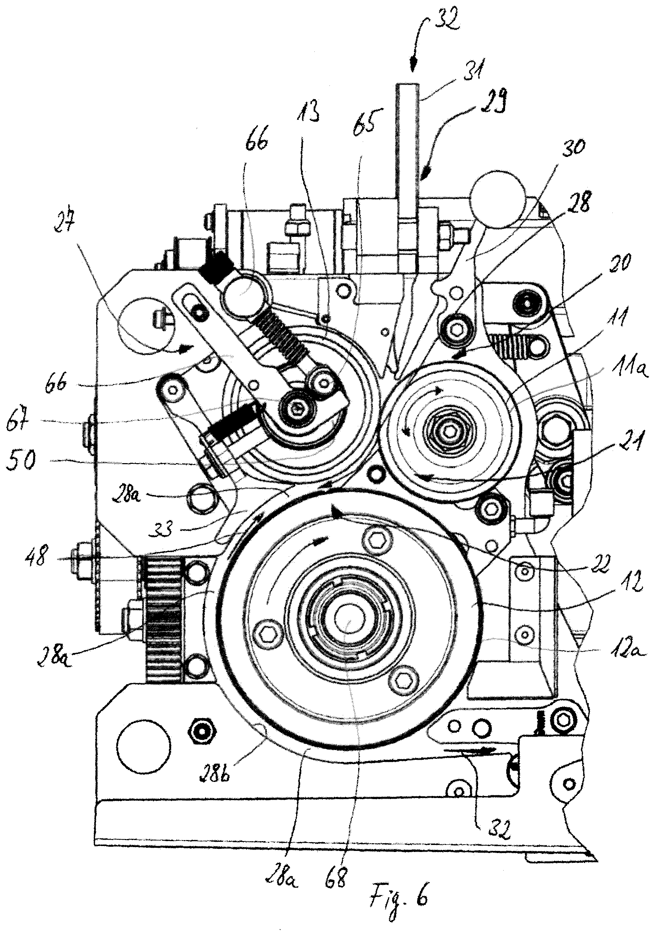

In die Bandhandhabungskomponente 17 des Umreifungskopfs 5 ist eine Bandvorschubeinrichtung 20, eine Bandrückzugseinrichtung 21 sowie eine Spanneinrichtung 22 integriert. Gemäss des hier gezeigten Ausführungsbeispiels sind für die Bandvorschub-, Bandrückzugs- und die Spanneinrichtung 20, 21, 22 gemeinsame Rollen 11, 12; 13 vorgesehen. Von den insgesamt nur drei Rollen 11, 12, 13 sind zwei Rollen 11, 12 motorisch angetriebene Rollen. Die beiden Rollen 11, 12 werden mit dem gleichen (nur einen) Motor 14, im Ausführungsbeispiel einem Elektromotor, angetrieben. Hierzu kann beispielsweise von dem gemeinsamen Motor 14 jeweils ein Antriebsstrang zu einer der beiden Rollen 11, 12 geführt sein. Die Rolle 11 ist hierbei sowohl als Antriebsrad für den Bandvorschub (Bandvorschubsrad) als auch als Antriebsrad für den Bandrückzug (Bandrückzugsrad) vorgesehen. Um im dargestellten Ausführungsbeispiel diese beiden Funktionen mit nur einem Rad ausführen zu können, ist die Rolle 11 mit dem gleichen Antriebsmotor 14 in beide Drehrichtungen antreibbar. In der Darstellung von Fig. 6 ist dabei die Drehrichtung entgegen des Uhrzeigersinns die Bandvorschubrichtung und die Drehrichtung im Uhrzeigersinn die Bandrückzugrichtung. Wie in Fig. 2 gezeigt ist, wird vom gemeinsamen Motor 14 mittels einer Getriebeeinrichtung die motorische Antriebsbewegung auf beide Räder bzw. Rollen 11, 12 übertragen. Im vorliegenden Ausführungsbeispiel umfasst die Getriebeeinrichtung 14a ein Zahnriemengetriebe, das die Antriebsbewegung von der Motorwelle auf eine zur Motorwelle parallel verlaufende weitere Welle überträgt. Auf dieser weiteren Welle sind zwei Zahnräder angeordnet, die je zu einem weiteren von zwei Teilgetrieben der Getriebeeinrichtung gehören. Von einem dieser beiden Teilgetrieben der Getriebeeinrichtung wird die motorische Antriebsbewegung auf die Rolle bzw. das Rad 11 und vom anderen Teilgetriebe auf das Spannrad 12 übertragen. Je nach Drehrichtung der Motorwelle drehen somit im Ausführungsbeispiel sowohl das Spannrad 12 als auch das Rad 11 in unterschiedliche Drehrichtungen.

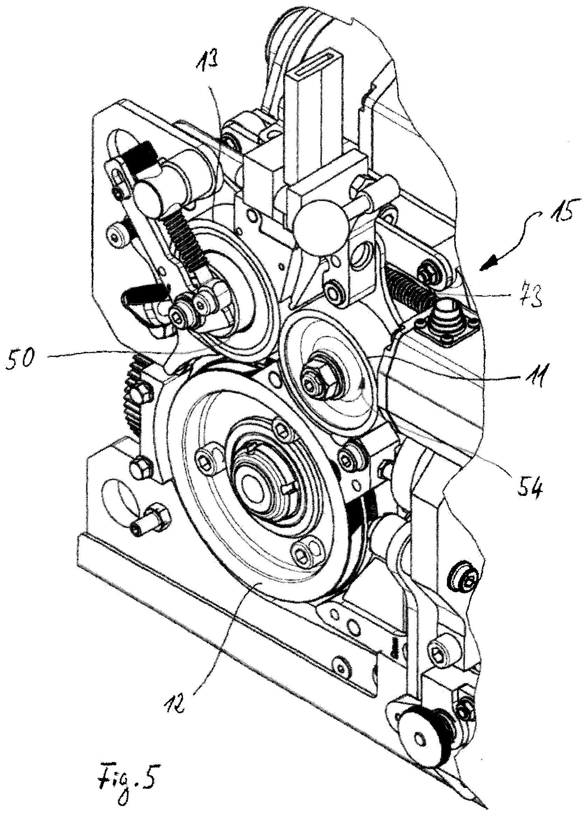

In der in Fig. 5, 6 wiedergegebenen Einbaulage des Umreifungskopfs ist die Rolle 11 oberhalb der Rolle 12 angeordnet. Die Rolle 12 ist Bestandteil der Spanneinrichtung 22 und hat die Funktion des Spannrads. Sie weist einen deutlich größeren Durchmesser als die Rolle 11 auf. Das Spannrad 12 ist aufgrund der starren Verbindung mit dem Motor 14 und der vom Motor ausgeführten Antriebsbewegungen in beiden Drehrichtungen, ebenfalls in beide Drehrichtungen antreibbar. Für die Aufbringung der vorgesehenen Bandspannung auf das Umreifungsband, insbesondere auf die Bandschlaufe, wird vom Spannrad jedoch nur die Antriebsbewegung in Spannrichtung genutzt, d.h. bezogen auf die Darstellung von Fig. 6 die Drehrichtung im Uhrzeigerrichtung. In bevorzugten Ausführungsformen kann durch eine dem Spannvorgang nachfolgende und zur Drehrichtung beim Spannvorgang entgegengesetzte Rotationsbewegung des Spannrads eine Entspannung des sich im Umreifungskopf befindlichen und nicht mehr zur Bandschlaufe gehörenden Bandabschnitts stattfinden. Die Antriebsbewegungen sowohl für die Spannbewegung als auch für die Entspannbewegung stammen vom gleichen Antriebsmotor wie für die Rolle 11. Als Alternative zum hier dargestellten Ausführungsbeispiel der Erfindung kann in anderen Ausführungsformen im nicht näher dargestellten Antriebsstrang vom Motor zu den beiden Rollen 11, 12 eine schaltbare Kupplung vorgesehen, mit der die Antriebsbewegung entweder auf die Rolle 11 oder die Rolle 12 geleitet werden kann. Neben Ausführungsformen in denen das Spannrad wiederum in beide Drehrichtungen antreibbar ist, kann auch vorgesehen sein, dass das Spannrad auch nur in die die für den Spannvorgang vorgesehene Drehrichtung antreibbar ist.

Wie der Darstellung von Fig. 6 zu entnehmen ist, ist die Rolle 13 sowohl zur Rolle 11 als auch zum Spannrad 12 benachbart. Die Rolle 13 ist rotativ nicht angetrieben und mittels einer Schwenkeinrichtung schwenkbar angelenkt. Die Schwenkeinrichtung ist mit einem Antrieb wirkverbunden, durch welche die Rolle (motorisch) angetriebene Schwenkbewegungen ausführen kann. Durch die Schwenkbewegung kann die als Gegenrolle fungierende Rolle 13 entweder in Anlage gegen die Rolle 11 oder in Anlage gegen das Spannrad 12 gebracht werden, wobei sich in der jeweiligen Endlage der schwenkbaren Rolle 13 jeweils das Umreifungsband zwischen einer der Rollen 11, 12 und der Rolle 13 befindet. Je nachdem, gegen welche der Rollen 11, 12 die Gegenrolle 13 anliegt, drückt die Gegenrolle 13 das Band dann an die entsprechende Rolle 11, 12, so dass die entsprechende Rolle 11, 12 ihre Rotationsbewegung möglichst schlupffrei als Vorschub-, Rückzug- oder Spannbewegung sowie gegebenenfalls als Entspannbewegung auf das Umreifungsband übertragen kann. Die Gegenrolle 13 ist somit zusammen mit der Rolle 11 sowohl Bestandteil der Bandvorschub- als auch Bestandteil der Bandrückzugseinrichtung. Zusammen mit dem Spannrad 12 ist die Gegenrolle 13 auch Bestandteil der Spanneinrichtung 22. Durch diese bevorzugte erfindungsgemässe Ausgestaltung kann die bisher bei vorbekannten Lösungen übliche vierte Rolle vermieden werden. Bei diesen vorbekannten Lösungen sind der Antriebsrolle und dem Spannrad jeweils eine von zwei Gegenrollen fest zugeordnet. Die bevorzugte erfindungsgemässe 3-Rollen Lösung kann demgegenüber eine deutlich kompaktere Ausgestaltung ermöglichen.

Die Rollen 11, 12, 13 sind im Umreifungskopf 5 zudem Bestandteil eines Bandführungskanals 28, durch den der Verlauf sowie der Vor- und Rückzugsweg des Bands vorbestimmt wird. Der Bandführungskanal 28 ist wiederum Teil der Bandführung 6. Wie in Fig.6 zu erkennen ist, weist der Umreifungskopf 5 eine erste Schnittstelle 29 auf, an der sich der Umreifungskopf 5 an die Vorratsrollenseite der Bandführung anschliesst. Das hier ausgebildete eine Ende des Bandführungskanals 28 ist als Schnellwechselschnittstelle ausgebildet. Diese weist ein mittels eines schwenkbaren Klemmhebels 30 an den Umreifungskopf klemmbares Kanalstück 31 auf, durch den das Band in den Umreifungskopf zugeführt wird. Das Kanalstück 31 endet unmittelbar vor der Umfangsfläche 11a der Rolle 11, so dass das Umreifungsband zumindest näherungsweise tangential zur Umfangsfläche 11a der Rolle 11 zugeführt werden kann. Befindet sich die die Rolle 13 in ihrer zur Rolle 11 geschwenkten Endposition, so wird das Band zwischen den Rollen 11, 13 hindurchgeführt, wobei die Rolle 13 das Band gegen die Rolle 11 drückt.

In Bandvorschubrichtung 32 gesehen, gelangt das Band im seinem weiteren Verlauf zum Spannrad 12. Hier ist von der Gegenrolle 13 ausgehend, durch geeignete Kanalbildungsmittel ein sich über ungefähr 180° am Umfang des Spannrads 12 erstreckender kreisbogenförmigen Kanalabschnitt 28a gebildet. In Bezug auf die Banddicke ist der Kanalabschnitt 28a deutlich breiter ausgebildet als die Banddicke. Die innere Begrenzung des Kanalabschnitts wird durch den sich jeweils im Bereich des Kanalabschnitts befindenden Abschnitt der Umfangsfläche 12a des Spannrads 12 gebildet. Die in radialer Sicht äussere Begrenzung des Kanalabschnitts 28a weist Führungsbleche sowie ein zusammen mit der Gegenrolle 13 schwenkbares äusseres Kanalsegment auf, mit dem sich der äussere Kanalabschnitt geschlossen halten lässt, obwohl sich die schwenkbare Gegenrolle 13 im Bereich des äusseren Kanalabschnitts befindet. Ohne das schwenkbare Kanalsegment 33 oder eines gleichwirkenden anderen Elements würde sich zumindest in einer der beiden Schwenkendpositionen der Gegenrolle 13 eventuell eine offene Stelle des Kanalabschnitts ergeben, die sich in Bezug auf eine sichere Bandführung möglicherweise negativ auswirken könnte.

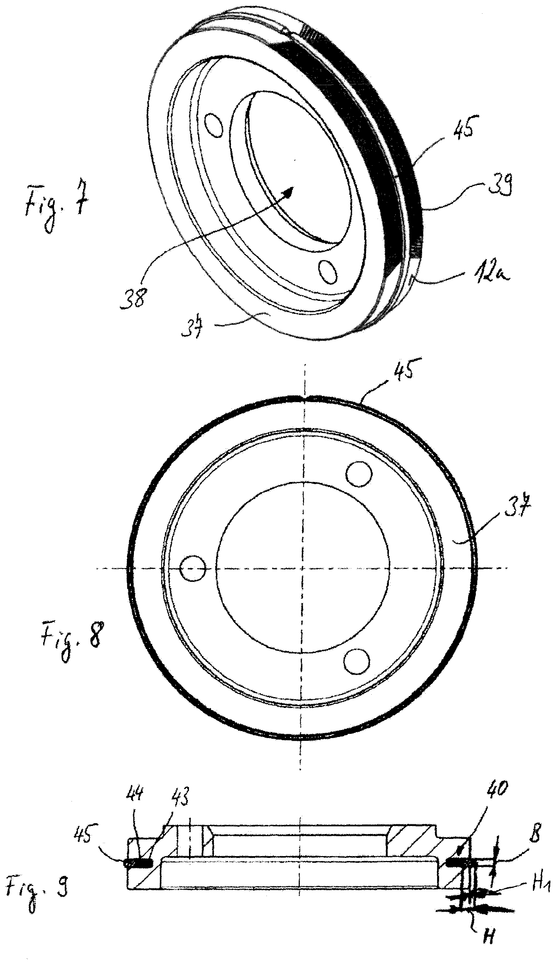

In den Fig. 7, 8, 9 ist das Spannrad in drei Darstellungen gezeigt. Dieses weist einen Ring 37 auf, der mit einer Ausnehmung 38 versehen ist, die zur Verbindung des Spannrads 12 mit einer Welle des Antriebs, insbesondere mit einer Welle eines Getriebes des Antriebs vorgesehen ist. In Fig. 2 ist das auf die Welle montierte Spannrad 12 gezeigt. Wie ebenfalls aus Fig. 6 hervorgeht, ist das kreisförmige Spannrad mit einer Umfangsfläche 12a mit zumindest im wesentlichen konstanter Breite versehen. Das Spannrad 12 ist an seiner Umfangsfläche 12a mit einer Rändelung oder Verzahnung 39 versehen, durch welche die Eingriffsverhältnisse des Spannrads 12 am Umreifungsband verbessert werden. Anstelle einer Rändelung oder Verzahnung 39 könnte auch jede andere geometrisch bestimmte oder unbestimmte Aufrauhung der Umfangsfläche 12a des Spannrads vorgesehen sein, mit der ein beim Spannvorgang möglicher Schlupf zwischen dem Spannrad und dem Umreifungsband zumindest weitestgehend verhindert werden kann.

Vorzugsweise zumindest in etwa mittig - in Bezug auf die Breite des Spannrads 12 - ist mit Abstand zu den seitlichen Rändern des Spannrads über den gesamten Umfang der Umfangsfläche 12a eine Nut 40 mit einer vergleichsweise geringen Breite eingebracht, die deutlich tiefer als breit ausgebildet ist. In der Nut 40 befinden sich im Ausführungsbeispiel zwei gummielastische O-Ringe 43, 44 übereinander, die in der Nut 40 radial hintereinander angeordnet sind. Hierbei ist einer der O-Ringe 43 mit einer geringeren und der andere O-Ringe 44 mit einem im Vergleich dazu grösseren Abstand zur Drehachse des Spannrads 12 angeordnet. Die Breite der O-Ringe 43, 44 ist dabei derart vorgesehen, dass sie in etwa der Breite der Nut 40 entsprechen. Die beiden O-Ringe 43, 44 befinden sich vollständig innerhalb der Nut 40. Beide O-Ringe 43, 44 sind aus gummielastischem Material gebildet.

Auf dem äusseren der beiden O-Ringe 43, 44 sitzt ein als Abstandselement vorgesehener Ring 45 auf, der im Ausführungsbeispiel aus einem metallischen Werkstoff gestaltet ist. Der Ring 45 ist in diesem Ausführungsbeispiel elastisch verformbar. Ebenso könnte der Ring im wesentlichen in sich starr oder formstabil ausgebildet sein. Um diese elastischen Eigenschaften des Rings zu erzielen, könnte der Ring 45 auch aus einem oder mehreren anderen Werkstoffen als einem metallischen Werkstoff gebildet sein, beispielsweise aus einem elastischen Kunststoff. Im Ausführungsbeispiel ist dieser Metallring 45 in Bezug auf seinen Querschnitt mit einer geringeren Breite B als Höhe H versehen. Die Höhe des O-Rings ist in Bezug auf die Nuttiefe und die Höhe der O-Ringe derart abgestimmt, dass der Ring mit einer Höhe H₁ aus der Nut 40 herausragt. Der Ring 45 steht damit in seinem in Fig. 9 gezeigten unbelasteten Zustand über die Umfangsfläche 12a des Spannrings 12 über, insbesondere über seinen gesamten Umfang bzw. über den gesamten Umfang des Spannrings 12.

Das Umreifungsband wird zu Beginn des Umreifungsvorgangs mit vorzugsweise hoher Geschwindigkeit vom Umreifungskopf 5 aus mit seinem freien Bandende voraus durch die Bandführung 6 geschoben. Hierzu befindet sich die Gegenrolle 13 in Anlage gegen die eine Seite des Bands. Das Band wird durch die Gegenrolle mit seiner anderen Seite gegen die motorisch angetriebene Rolle 11 gedrückt. Die rotatorische Antriebsbewegung der Rolle 11 in Vorschubrichtung wird hierdurch auf das Umreifungsband übertragen, was dessen Vorschubbewegung in Vorschubrichtung bewirkt. Das Band kommt hinter dem Auslaufbereich des Bands aus dem Spalt zwischen Rolle 11 und Gegenrolle 13 in Kontakt mit dem Spannrad 12, ohne aber auf das Spannrad 12 einen nennenswerten Druck auszuüben.

Nachdem das Band vollständig durch die Bandführung 6 durchgeschoben ist, erreicht das Bandende wieder den Verschlusskopf. Hier betätigt das Bandende einen Endschalter, wodurch die Vorschubbewegung gestoppt und das Bandende geklemmt wird. Diese sowie weitere Ein- und Ausschaltvorgänge von Komponenten des Verschlusskopfs werden durch die Steuerungskomponente 16 vorgenommen, die hierzu mit einer dem Grunde nach bekannten motorisch angetriebenen Nockenwellensteuerung versehen ist.

Nun setzt die Nockenwellensteuerung der Steuerungskomponente 16 die Rolle 11 in zur Vorschubrichtung umgekehrter Drehrichtung in Bewegung. Das weiterhin zwischen der Rolle 11 und der Gegenrolle 13 eingeklemmte Umreifungsband wird hierdurch in umgekehrter, also in Bandrückzugsrichtung 48, bewegt. Die Umfangslänge der Bandschlaufe, deren Bandende weiterhin eingeklemmt ist, wird hierdurch kontinuierlich verkürzt. Das Band wird hierdurch aus der Bandführung 6 gerissen und als Resultat davon um das jeweilige Packgut angelegt.

In Fig. 6 ist das Spannrad 12 während des Bandrückzugsvorgangs dargestellt. Wie dieser Darstellung zu entnehmen ist, gelangt während des Bandrückzugsvorgangs das Band in Anlage gegen das Spannrad 12. Das Umreifungsband liegt im wesenltichen über dem gesamten kreisbogenförmigen Kanalabschnitt 28a am Spannrad 12 an, ähnlich wie das auch beim erst nachfolgenden Spannvorgang der Fall ist. Das Band wird zwar hier zurückgezogen, aber aufgrund seiner Möglichkeit dieser Bewegung dadurch nachzugeben, dass es sich, wie vorgesehen, aus der Bandführung herausbewegt, wird während dieser Phase trotzdem nur eine vergleichweise geringe Bandspannung auf das Band der Bandschlaufe aufgebracht. Als Folge dieses Kontakts mit dem Spannrad 12 und des gegenüber der Umfangsfläche überstehenden Rings 45, liegt das Band nicht an der Umfangsfläche des Spannrads 12 sondern am sich in der Umfangsfläche 12a befindenden Ring 45 an. Dieser Kontakt mit dem im Ausführungsbeispiel hier als Ring 45 ausgebildeten Abstandselement führt dazu, dass das Band während des Bandrückzugs nicht durch die Rändelung oder Verzahnung 39 der Umfangsfläche 12a beschädigt werden kann.

Nachdem das Band durch den Bandrückzug an das Packgut angelegt ist, wird von der Steuerung von Bandrückzug auf Erzeugung einer Bandspannung umgeschaltet, wodurch das am Packgut anliegende Band stramm gezogen werden soll. Hierzu wird zunächst die Gegenrolle 13 von ihrer Anlageposition gegen die Rolle 11 in eine Anlageposition gegen das Spannrad 12 geschwenkt. Das in die gleiche Rotationsrichtung versetzte Spannrad 12 wie zuvor die Rolle 11, dreht mit geringerer Drehzahl aber dafür unter Einsatz eines grösseren Drehmoments und zieht weiter am Umreifungungsband. An die im Ausführungsbeispiel weiterhin angetriebene und sich schneller drehende Rolle 11 liegt aufgrund des fehlenden Drucks der Gegenrolle 13 das Band nun hingegen nicht mehr in einer Weise an, durch die die Rolle 11 ihre Bewegung auf das Band übertragen könnte. Da das Umreifungsband in diesem Stadium bereits gegen das Packgut anliegt, wird das Band durch das Spannrad 12 höchstens noch mit einer im Vergleich zur Bandrückzugsphase geringen Länge zurückgezogen. Während dieser Spannphase wird auf das Band vor allem eine grössere Bandspannung aufgebracht.

Bereits zu Beginn der Spannphase wird durch den Druck der Gegenrolle 13 in Richtung auf das Spannrad und das dazwischen befindliche Band, der Ring 45 in Richtung zum Nutgrund und damit auch in im wesentlichen radialer Richtung gesehen in Richtung auf die Drehachse des Spannrads 12 gedrückt. Hierdurch liegt bereits zu Beginn der Spannphase das Band gegen den Ring 45 an und drückt diesen ebenfalls zumindest im Bereich der Gegenrolle 13 in Richtung auf den Nutgrund. Der Ring 45 hat damit im Bereich der Gegenrolle 13 bereits zu Beginn des Spannvorgangs einen geringeren Abstand zur Drehachse des Spannrads als in seinem unbelasteten Zustand, beispielsweise während der Bandvorschub- oder der Bandrückzugsphase.

Das im weiteren Verlauf des Spannvorgangs vom Spannrad 12 auf das Band übertragene grössere Drehmoment im Vergleich zur Bandrückzugsphase der Rolle 11 hat eine größere Reaktionskraft des Bands zur Folge. Diese grössere Reaktionskraft führt nun dazu, dass das Band den Ring 45 nicht nur im Kontaktbereich mit der Gegenrolle 13, sondern über seine Kontaktlänge (Umschlingungswinkel, in Umfangsrichtung gesehen) mit dem Ring 45 in die Nut hineindrückt, wodurch das Band nun entlang seines Umschlingungswinkels am Spannrad 12 gegen dessen Umfangsfläche anliegt. Das Band drückt entlang seines Umschlingungswinkels am Spannrad den Ring gegen die Federkräfte der O-Ringe in die Nut hinein. In Abhängigkeit der Eigenschaften des Rings 45, verformt sich dieser hierdurch gegbenenfalls elastisch und kann entlang jenes Umfangsabschnitts, an dem das Umreifungsband nicht gegen das Spannrad anliegt, wieder teilweise (in Bezug auf seine Höhe) aus der Nut austreten. Ausserhalb des Umschlingungswinkels des Bands mit dem Spannrad, kann der Ring 45 hierbei in größerem Masse aus der Umfangsfläche hervorstehen, als im Vergleich zum unbelasteten Zustand, in dem er eine Höhe H₁ übersteht. Da der Ring rotationsfest in der Nut angeordnet ist, wird in Abhängigkeit der jeweiligen Rotationsposition des Spannrads 12, jede einzelne Stelle des Rings in alternierender Weise abwechselnd in die Nut 40 hineingedrückt und tritt wieder aus ihr heraus, bis sie aufgrund der Rotation des Spannrads wieder die Stelle erreicht, an der das Band einen Abschnitt der Umfangsfläche umschlingt und dadurch den Ring entlang dieses Abschnitts in die Nut hineindrückt. Somit kann trotz des vorhandenen Schutzes des Umreifungsbands vor einem Kontakt mit der Umfangsfläche des Spannrads während der Bandrückzugsphase trotzdem ein funktionssicherer Kontakt des Bands mit dem gleichen Spannrad während der Bandspannungsphase erreicht werden.

Die Gegenrolle 13 kann mit Vorteil mit unterschiedlichen Andruckkräften einerseits gegen die Rolle 11 (Vorschubrolle bzw. Rückzugsrolle) und andererseits gegen das Spannrad 12 gedrückt werden (im Einsatz der Umreifungseinrichtung jeweils mit dazwischenliegendem Umreifungsband). Im Vergleich zu den möglichen Andruckkräften gegen de Rolle 11 höhere Andruckkräfte gegen das Spannrad, können für eine hohe Funktionssicherheit und der Möglichkeit zur Aufbringung von hohen Bandspannungen auf das Umreifungsband von Vorteil sein. Nachfolgend wird deshalb erläutert, wie in einer bevorzugten Ausführungsform der Erfindung trotz der Schwenkbewegung der Gegenrolle 13 zwischen zwei Endpositionen in den Endposition unterschiedliche Andruckkräfte realisiert werden können.

Die Gegenrolle 13 ist hierzu auf einem Exzenter 50 angeordnet, der wiederum auf einer Welle 51 eines Trägers 52 angeordnet ist. Der Träger weist mit Abstand zur Welle 52 eine Aufnahme 53 auf, die zur Anordnung auf der Lagerstelle 54 der Rolle 11 vorgesehen ist (Fig. 5, 6). Die Aufnahme 53 ist hierbei um ihre Drehachse frei auf der Lagerstelle 54 der Rolle 11 drehbar und kann somit Schwenkbewegungen um ihre Drehachse ausführen.

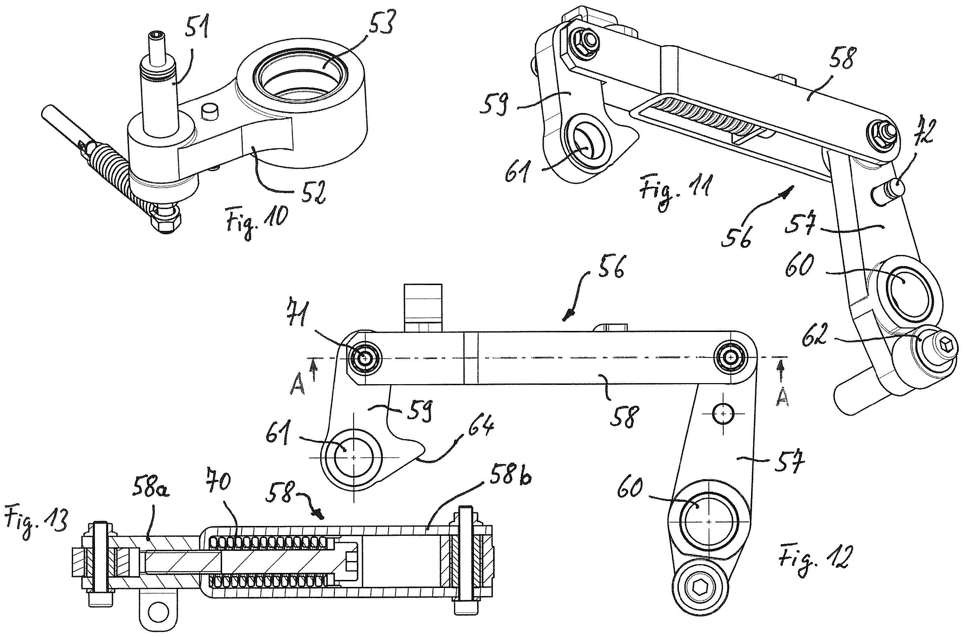

Im Bereich der Gegenrolle 13 und der Rolle 11 ist ein mehrere schwenkbar aneinander angelenkte Hebel 57, 58, 59 aufweisendes Parallelogramm vorgesehen. Das Parallelogramm 56 weist einen langen vertikalen Hebel 57, einen horizontalen Hebel 58 sowie einen kurzen vertikalen Hebel 59 auf. Das Parallelogramm ist am langen vertikalen Hebel 57 sowie am kurzen vertikalen Hebel 59 schwenkbar angelenkt. Die Hebel 57 sowie 59 weisen hierzu Schwenklagerstellen 60, 61 auf. Über eine Glockenkurve 62 kann auf den langen vertikalen Hebel 57 eine Rotationsbewegung übertragen werden, die zur Schwenkbewegung des Hebels 57 um seine Schwenkagerstelle 60 führt. In der Darstellung von Fig. 12 erfolgt die Schwenkbewegung des Hebels 57 im Uhrzeigersinn.

Der Hebel 58 zieht hierdurch an der Anlenkstelle des kurzen vertikalen Hebels letzteren auch in Richtung auf den Hebel 57 zu, wodurch sich der vertikale Hebel 59 in der Darstellung von Fig. 11, 12 ebenfalls im Uhrzeigersinn um seine Schwenklagerstelle 62 schwenkt. Eine am kurzen vertikalen Hebel 59 ausgebildete schräge Fläche 64 drückt hierdurch auf ein auf der Welle 51 angeordnetes Lager 51. Die schräge Fläche führt hierdurch eine Bewegung im Uhrzeigersinn (gemäß Darstellung von Fig. 12) aus und hat die Tendenz eine horizontale Ausrichtung einzunehmen. Hierdurch führt der Träger 52 eine Schwenkbewegung aus, wodurch die Gegenrolle 13 von ihrer Endposition gegen die Rolle 11 in Richtung auf das Spannrad 12 geschwenkt wird.

Bei Erreichen des Spannrads liegt die Gegenrolle gegen das Spannrad an und kann keine weitere Schwenkbewegung ausführen. Der Hebel 57 schwenkt jedoch weiter, wodurch die Lagerstelle 65 des Exzenters 50 im Gegenuhrzeigersinn in Richtung auf einen L-förmigen Träger 66 bewegt wird. Nachdem die Lagerstelle 65 gegen den L-förmigen Träger 65 drückt, stoppt die Bewegung der Lagerstelle 65 und diese befindet sich zumindest näherungsweise mit einer oberen Lagerstelle 66, der Rotationsachse 67 der Gegenrolle 13 sowie der Rotationsachse 68 des Spannrads 12 in einer Linie. Ein bisher die Andruckkraft der Gegenrolle 13 erzeugendes Federelement ist hierdurch nicht mehr wirksam.

Eine weitere Bewegung des Hebels 57 bei seiner Schwenkbewegung führt nun dazu, dass auch der Hebel 59 keine Bewegung mehr ausführen kann und deshalb zwei Teile 58a und 58b des horizontalen Hebels 58 auseinander gezogen werden. Ein sich zwischen den beiden Teilen 58a, 58b des Hebels angeordnetes Federelement 70 wird hierdurch komprimiert, wodurch dessen Federkraft steigt. Dies führt zu einem Drehmoment des Hebels 59 um die Schwenklagerstelle 61 mit dem Hebelarm des Abstands der Schwenklagerstelle 61 von der Anlenkstelle 71 des Hebels 58 am Hebel 59. In der Folge drückt die schräge Fläche 64 in Form eines Drehmoments um die Schwenklagerstelle 61 auf das Lager, was nun zu einer Andrückkraft der Rolle 13 gegen das Spannrad führt. Durch ein entsprechend dimensioniertes und ausgelegtes Federelement 70 sowie entsprechender Hebelverhältnisse können hierdurch hohe Andrückkräfte der Rolle 13 gegen das Spannrad erreicht werden.

Eine Rückstellung des Parallelogramms kann durch eine am Zapfen 72 des Hebels 5 angeordnete weitere Feder 73 erfolgen.

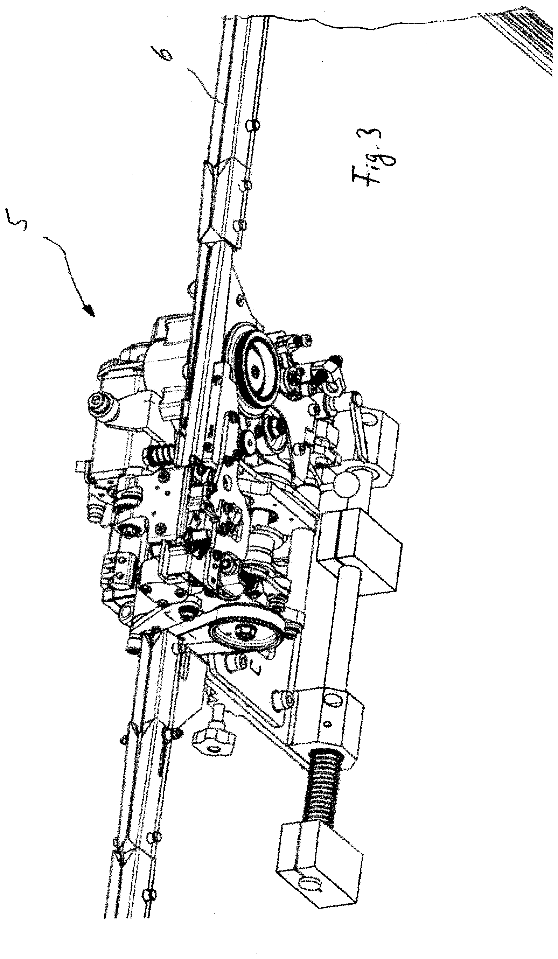

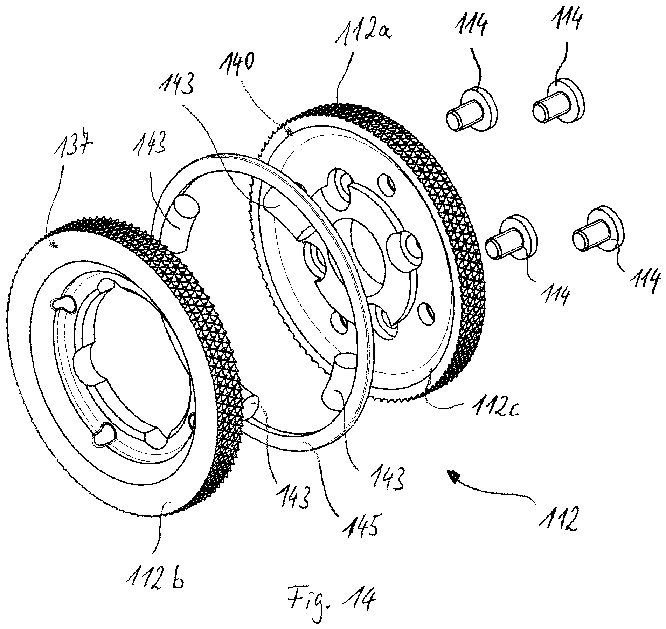

Nachfolgend werden alternative Ausführungsformen von vorstehend erörterten Bauteilen und Baugruppen beschrieben. Es wird hierbei im Wesentlichen lediglich auf Unterschiede zu den entsprechenden Bauteilen aus den Fig. 1 bis 13 eingegangen. Soweit bei diesen Ausführungsformen identische oder ähnliche Ausgestaltungen wie bei dem Ausführungsbeispiel der Fig. 1 bis 13 gegeben, wird darauf nachfolgend nicht näher eingegangen, der Offenbarungsgehalt der Ausführungsbeispiele der Fig. 1 bis 13 wird jedoch durch Bezugnahme auch für die Ausführungsbeispiele der Fig. 14 bis - 19 aufgenommen.

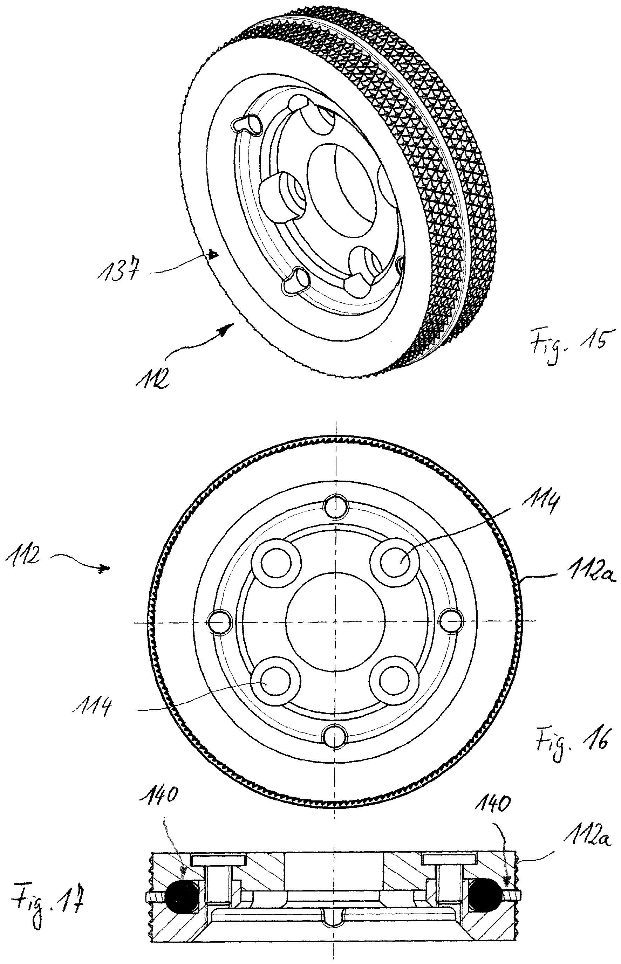

In Fig. 14, 15, 16 und 17 ist eine weitere bevorzugte Ausführungsform eines erfindungsgemässen Spannrads 112 dargestellt. Das Spannrad 112 kann in Bezug auf seine Breite, vorzugsweise etwa in der Mitte längsgeteilt sein, wobei die beiden Teile 112b, 112c des Spannrads 112 mittels geeigneten Befestigungselementen, beispielsweise Schrauben 114, lösbar miteinander verbindbar sind. Im Bereich dieser Teilungsebene, die nicht eben verlaufen muss, ist im äusseren Ring 137 des Spannrads 112 eine umlaufende Nut 140 ausgebildet, die zur Umfangsfläche 112a des Spannrads 112 hin offen ist und sich in Richtung zu dieser verjüngt bzw. verkleinert ist.

In der Nut 140 können ein oder mehrere Rückstellelemente angeordnet sein. Im Ausführungsbeispiel sind als Rückstellelement elastische Ringabschnitte 143, beispielsweise mehrere gummielastische O-Ringabschnitte 143, angeordnet. Vorzugsweise sind diese Ringabschnitte mit Abstand zueinander gleichmässig in der Nut 140 verteilt, wie dies im Ausführungsbeispiel mit insgesamt vier Ringabschnitten 143 der Fall ist. Die Rückstellelemente 143 befinden sich unterhalb von einem oder mehreren Abstandselementen. Im Ausführungsbeispiel ist lediglich ein als in sich geschlossener Ring ausgebildetes Abstandselement 145 vorgesehen. Ein Aussendurchmesser des in der Nut angeordneten Rings 145 ist dabei so bemessen, dass im unbelasteten Zustand des Rings 145 dieser mit seiner äusseren Umfangsfläche über die Umfangsfläche 112a des Spannrings 112 übersteht. Mit seiner inneren Umfangsfläche befindet sich der Ring 145 in der Nut. Die Rückstellelemente sind an der inneren Umfangsfläche des kreisförmigen und im wesentlichen formstabilen Rings 145 angebracht. In anderen Ausführungsformen kann auch eine andere Anzahl an Abstandselementen sowie eine andere Anzahl von Rückstellelementen vorgesehen sein.

Durch Anlage eines Umreifungsbands gegen den Ring 145 und durch Ausübung einer bestimmten Mindestdruckkraft auf den Ring entlang eines bestimmten Winkelbereichs entlang eine Abschnitts des Umfangs des Spannrads durch das Umreifungsband, kann in etwa der entlang dieses Winkelbereichs über die Nut hinausragende Abschnitt des Rings 145 in die Nut 140 hineingedrückt werden, so dass in diesem ortsfesten Winkelbereich des Spannrads 112, das Umreifungsband in Anlage gegen die Umfangsfläche 112a des Spannrads 112 gelangt und von der Umfangsfläche 112a bei der Bewegung des Spannrads 112 mitgenommen werden kann. Der im Ausführungsbeispiel durch die erwarteten auf ihn einwirkenden Kräfte im wesentlichen nicht verformbare und somit formstabile Ring 145 wird bei diesem Vorgang somit in Bezug auf die Drehachse des Spannrads leicht exzentrisch angeordnet. Der Ring 145 ragt hierdurch mit seinem vom Umschlingungswinkel des Bands nicht erfassten Abschnitt weiter aus der Nut 140 heraus, als im vom Umreifungsband unbelasteten Zustand des Spannrads. Durch Entlastung des Rings 145 vom Umreifungsband oder bei nicht ausreichend grosser Druckkraft auf den Ring 145 durch das Umreifungsband, können nach Abschluss des Spannvorgangs die elastischen Rückstellkräfte von einem oder mehreren der Ringaschnitte 143 den Ring 145 wieder über seinen gesamten Umfang aus der Nut herausragen lassen.

Durch diese bevorzugte Anordnung kann während des Spannvorgangs, während dem das Umreifungsband eine ausreichend hohe Druckkraft auf den sich im Umschlingungsbereich des Umreifungsbands befindenden Ring 145 ausübt, der Ring 145 abschnittsweise in die Nut 140 hineingedrückt werden. Während des Rückzugsvorgangs, während dem nur eine vergleichsweise geringe Zugspannung im Umreifungsband vorhanden ist, ist die Druckkraft auf den im Umschlingungsbereich des Bands momentan angeordneten Abschnitt des Rings 145 nicht ausreichend gross, um diesen Ringabschnitt vollständig in die Nut 140 hineinzudrücken. Das Band liegt hierdurch gegen den Abschnitt des Rings 145 und nicht gegen die Oberfläche des Spannrads 112 an. Der Ring 145 hält das Umreifungsband mit Abstand zur Umfangsfläche des Spannrads 112.

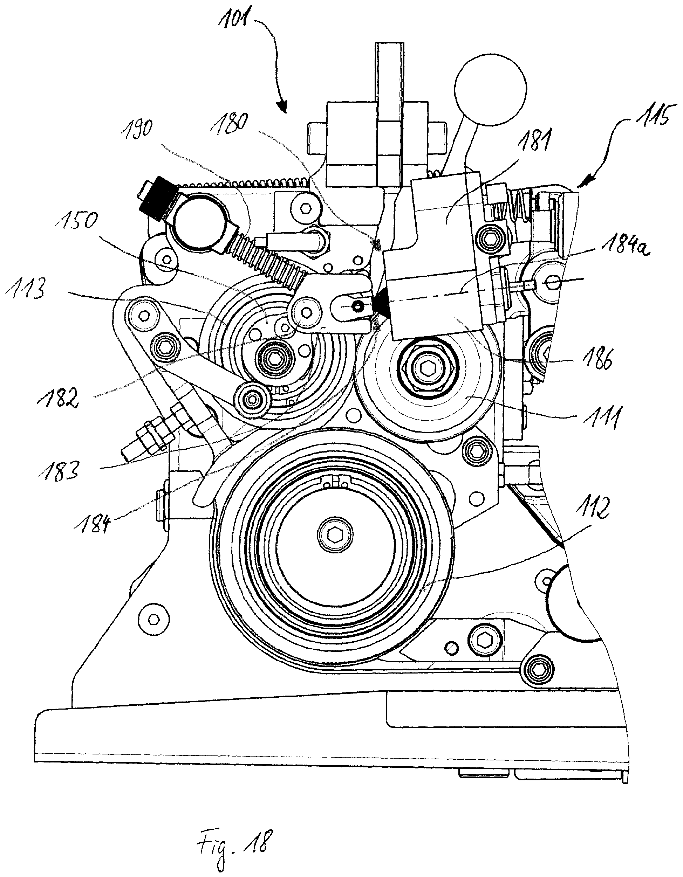

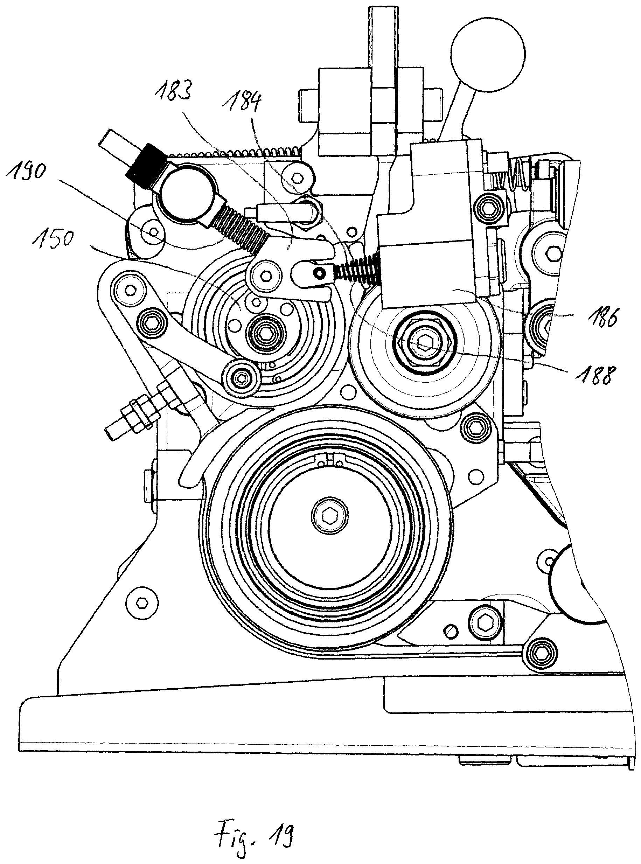

In den Fig. 18, 19 ist ein weiteres Ausführungsbeispiel für eine Bandantriebseinrichtung 115 dargestellt. Auch diese weist lediglich drei Rollen 111, 112, 113 auf, die für die Aufbringung der Bandvorschub-, Bandrückzugs- sowie die Bandspannungsbewegung auf das Band durch Kontakt mit dem Band verantwortlich sind, wobei die beiden Rollen 111 und 112 mittels eines Motors, insbesondere mittels nur eines gemeinsamen Motors, antreibbar sind. Die relative Anordnung der Drehachsen der drei Rollen 111, 112, 113 zueinander, entspricht zumindest in etwa der Anordnung dieser Drehachsen im Ausführungsbeispiel von Fig. 5 und 6.

Die Gegenrolle 113 ist wiederum schwenkbar ausgebildet, so dass sie in einer Schwenkposition zum Andruck des Umreifungsbands gegen die Rolle 111 und in einer anderen Schwenkposition zum Andruck des Umreifungsbands gegen die Spannrolle 112 vorgesehen ist. Der hierfür vorgesehene Schwenkmechanismus der Gegenrolle 113 und dessen Antrieb kann in prinzipiell gleicher Weise wie bei dem Ausführungsbeispiel der Fig. 1 bis 13 ausgebildet sein. Die Gegenrolle 113 ist wie im Ausführungsbeispiel von Fig. 5 und 6 auf einem Exzenter 150 drehbar gelagert, so dass die Gegenrolle 113 bei einer Schwenkbewegung von einer der Rollen 111, 112 zur jeweils anderen Rolle 111, 112 eine nicht kreisbogenförmige Bewegung ausführt. Wie in den Fig. 18 und 19 gezeigt ist, ist am Exzenter 150 der Gegenrolle 113 eine Lüfteinrichtung 180 gelagert, wobei die Lüfteinrichtung 180 sich mit einem Träger 181 am Gestell der Umreifungsvorrichtung 101 abstützt. Die Lagerstelle 182 der Lüftungseinrichtung am Exzenter 150 ist selbst schwenkbar am Exzenter angeordnet und ist als C- oder gabelförmiges Element 183 ausgebildet, um hierdurch eine Aufnahme für ein Ende eines Kolbens 184 auszubilden. Dieser Kolben 184 ist im Träger 181 der Lüftungseinrichtung 180 verschiebbar angeordnet. Die Abstützstelle befindet sich in der Darstellung von Fig. 18 und 19 unmittelbar oberhalb der Rolle 111. Der Träger 181 der Lüftungseinrichtung ist hierbei ebenfalls schwenkbar gelagert.

Im gezeigten Ausführungsbeispiel ist die Lüfteinrichtung 180 mit einem Lüftelement versehen, das dazu vorgesehen ist, eine gesteuerte Bewegung auszuführen, mit der auf die Gegenrolle 113 eingewirkt wird, um die Gegenrolle 113 in ihrer Schwenkposition an der Rolle 111 zu lüften bzw. geringfügig abzuheben. Vorzugsweise soll die Gegenrolle 113 in ihrer Schwenkposition bei der Rolle 111 auch nach einer Lüftung wieder an die Rolle 111 angestellt werden können, beispielsweise ebenfalls mittels der Lüfteinrichtung. Im Ausführungsbeispiel ist das Lüftelement als Hubmagnet 186 ausgebildet, der an der Lüftungseinrichtung 180 angeordnet und gelagert ist. Der Hubmagnet 186 kann mit seinem Kolben 184 eine lineare Hubbewegung entlang der Längsachse 184a seines Kolbens 184 ausführen. Wie in Fig. 18, 19 gezeigt ist, ist ein Ende des Kolbens 184 in der zum Träger 181 hin offenen Ausnehmung des C- oder gabelförmigen Elements 183 angeordnet. Das Ende des Kolbens 184 sowie die Ausnehmung des C-förmigen Elements können dabei derart gestaltet sein, dass sich bei der Lüftungsbewegung das Ende des Kolbens 184 im C-förmigen Element relativ zu diesem bewegen kann.

Die verlängerte Längsachse 184a des Kolbens 184 verläuft hierbei zumindest in etwa durch die Anlenkstelle des C-förmigen Elements 183. Eine Hubbewegung des Kolbens 184 in Richtung auf die Gegenrolle 113 führt somit zu einer Drehbewegung des Exzenters um dessen Drehachse. In der Darstellung von Fig. 18 erfolgt die Drehbewegung im Gegenuhrzeigerinn, wie dies durch Vergleich der beiden Fig. 18 und 19 festgestellt werden kann. Die Rotationsbewegung des Exzenters 150 wiederum führt dazu, dass die Drehachse der Gegenrolle 113 parallelverschoben wird und sich zwischen der Rolle 111 und der Gegenrolle 113 ein Spalt bzw. ein vergrößerter Spalt ergibt. Die Breite des Spalts sollte hierbei eine Grösse aufweisen, die größer ist als die Dicke des jeweils verarbeiteten Umreifungsbands. Als Hubmagnet kann beispielsweise das Produkt GKb-32.06 des Unternehmens Isliker Magnete AG, CH-8450 Andelfingen, zum Einsatz kommen.

Auf dem Kolben 184 kann ein mechanisches Federelement angeordnet sein, insbesondere zumindest eine Druckfeder 188. Diese Druckfeder 188 wird bei der Bewegung der Gegenrolle 113 von der Spannrolle 112 zur Anlage gegen die Rolle 111 gestaucht und damit federelastisch gespannt. Der elektrisch betätigbare magnetische Hubkolben ist in dieser Phase ausgeschaltet und hat hierdurch keine Wirkung. Bei der Hubbewegung wird die Druckfeder 188 zumindest teilweise entspannt und die Federkraft wirkt unterstützend zu der vom Hubmagnet ausgeübten Kraft, mit welcher der Kolben 184 für die Lüftung der Gegenrolle 113 von der Rolle 111 bewegt wird. In anderen Ausführungsbeispielen, in denen der Hubmagnet oder ein anderes Rückstellelement alleine eine für den Lüftungsvorgang ausreichend hohe Kraft bereitstellt.

Bei der Erzeugung der Umreifung wird - wie bereits beschrieben - mittels der Rolle 111 und der gegen sie anliegende und das Band zwischen den beiden Rollen einklemmende Gegenrolle 113, das Band durch den Bandführungskanal 28 in Zuführrichtung bewegt. Bei Erreichen des Bereichs des Endes des Bandführungskanals, wie er beispielsweise in Fig. 1 in stark schematisierter Weise dargestellt ist, durch das Umreifungsband, trifft das Band auf einen Anschlag oder das Erreichen des Endes des Bandführungskanals kann auf andere Weise detektiert werden, beispielsweise durch eine Lichtschranke. Hierdurch wird ein Signal erzeugt, durch das die Steuerung der Umreifungsvorrichtung die motorische Antriebsbewegung der Rolle 111 stoppt und - zumindest im wesentlichen zeitgleich - die Hubbewegung des Kolbens 184 des Hubmagneten auslöst. In anderen Ausführungsformen der Erfindung ist es auch denkbar, dass der Stopp der Antriebsbewegung der Rolle 111 und der Beginn des Lüftungsvorgangs zeitlich zueinander versetzt sind, der Stopp der Antriebsbewegung also vor oder nach dem Beginn des Lüftvorgangs erfolgt.

Als Folge des Starts des Lüftvorgangs fährt der Kolben 184 in Richtung auf das C-förmige Element 183 aus und wirkt hierbei mit seinem Ende auf das C- oder gabelförmige Element ein. Aufgrund seiner Anordnung am Exzenter 150 wird der Exzenter bei der Hubbewegung des Kolbens gedreht. Im Ausführungsbeispiel und in der Darstellung von Fig. 18 erfolgt die Drehbewegung des Exzenters um einen Drehwinkel kleiner 90° in Gegenuhrzeigerrichtung. Die Drehbewegung erfolgt gegen die Federkraft der Andruckfeder 190, die hierbei gestaucht wird und ebenfalls am Exzenter 150 angelenkt ist. Als Folge der Drehbewegung wird die Gegenrolle 113 von der Rolle 111 gelüftet, d.h. angehoben und der Abstand zwischen den beiden Rollen 111, 113 vergrössert, so dass ein Spalt zwischen den Rollen entsteht, der grösser ist als die Banddicke.

Das mit hoher Geschwindigkeit durch den Bandkanal der Bandführung 6 geschossene Umreifungsband hat bei gattungsgemässen Umreifungsvorrichtungen durch den plötzlichen und abrupten Bandstopp die Tendenz zwischen den Rollen 111, 112, 113 und dem Ende des Umreifungskanals Wellen zu bilden. Insbesondere im Bereich der Rollen 111, 112, 113 können solche Wellen zu Funktionsstörungen führen. Durch die bevorzugte erfindungsgemässe Ausführungsform, bei der die Gegenrolle 113 gelüftet wird, kann das Band insbesondere unmittelbar nach dem Stopp des Vorschubs sich soweit als erforderlich und frei wieder entgegen der Vorschubrichtung in Richtung auf den Bandvorrat bewegen, damit sich der für die Länge des Bandkanals möglicherweise überschüssige und die Wellenbildung bewirkende Bandanteil im Bandführungskanal zurückbewegen kann. Die Steuerung der Umreifungsvorrichtung kann dann anschliessend den Hubmagneten wieder abschalten. Der Hubmagnet verliert hierdurch seine Wirkung, wodurch die Andruckfeder 190 den Exzenter 150 entgegen der Drehrichtung zuvor wieder zurückbewegen kann und damit die Gegenrolle 113 wieder in Anlageposition gegen das Band bringt, in der das Band zwischen der Rolle 111 und der Gegenrolle 113 eingeklemmt ist. Der anschliessende Bandrückzugs- sowie Spannvorgang kann in gleicher Weise wie bei den Ausführungformen der Erfindung gemäss den Fig. 1 bis 13 erfolgen.

### Bezugszeichenliste

| | | | |
|---|---|---|---|
| 1 | Umreifungsvorrichtung | 37 | Ring |
| 2 | Steuerung | 38 | Ausnehmung |
| 3 | Vorratseinrichtung | 39 | Rändelung/Verzahnung |
| 5 | Umreifungskopf | 40 | Nut |
| 6 | Bandführung | 43 | O-Ring |
| 8 | Gestell | 44 | O-Ring |
| 11 | Rolle | 45 | Ring |
| 11a | Umfangsfläche | 48 | Bandrückzugsrichtung |
| 12 | Spannrad | 50 | Exzenter |
| 12a | Umfangsfläche Spannrad | 51 | Welle |
| 13 | Gegenrolle | 52 | Träger |
| 14 | Motor | 53 | Aufnahme |
| 14a | Getriebeeinrichtung | 54 | Lagerstelle |
| 15 | Bandantriebseinrichtung | 56 | Parallelogramm |
| 16 | Steuerungskomponente | 57 | langer vertikaler Hebel |
| 17 | Bandhandhabungskomponente | 58 | horizontaler Hebel |
| 18 | Teilträger | 59 | kurzer vertikaler Hebel |
| 19 | Hauptträger | 60 | Schwenklagerstelle |
| 20 | Bandvorschubeinrichtung | 61 | Schwenklagerstelle |
| 21 | Bandrückzugseinrichtung | 64 | schräge Fläche |
| 22 | Spanneinrichtung | 65 | Lagerstelle |
| 23 | Achse | 66 | Träger |
| 27 | Schwenkeinrichtung | 67 | Rotationsachse |
| 28 | Bandführungskanals | 68 | Rrotationsachse |
| 28a | Kanalabschnitt | 70 | Federelement |
| 28b | äussere Begrenzung | 71 | Anlenkstelle |
| 29 | Schnittstelle | 72 | Zapfen |
| 30 | Klemmhebel | | |
| 31 | Kanalstück | 101 | Umreifungsvorrichtung |
| 32 | Bandvorschubrichtung | 111 | Rolle |
| 33 | äusseres Kanalsegment | 112 | Spannrad |
| 112a | Umfangsfläche | 184 | Kolben |
| 112b | Teil | 184a | Achse |
| 112c | Teil | 186 | Hubmagnet |
| 113 | Gegenrolle | 188 | Druckfeder |
| 114 | Schraube | 190 | Andruckfeder |
| 115 | Bandantriebseinrichtung | B | Breite |
| 137 | Ring | H | Höhe |
| 140 | Nut | H₁ | Höhe |
| 143 | Ringabschnitt | | |
| 145 | Ring | | |
| 150 | Exzenter | | |
| 180 | Lüftungseinrichtung | | |
| 181 | Träger | | |
| 182 | Lagerstelle | | |
| 183 | C-förmiges Element | | |

## Patentansprüche

1. Umreifungskopf (5) oder Umreifungseinrichtung einer Umreifungsvorrichtung (1) zur Umreifung von Packgut mit einem Umreifungsband, insbesondere mit einem Kunststoffumreifungsband, der mit einer Vorschub- und Spanneinrichtung (20, 22) versehen ist, die mit mehreren Rädern (11, 12, 13; 111, 112, 113) zur Übertragung einer Vorschub-, Rückzugs- und Spannbewegung auf das Umreifungsband versehen sind, wobei zumindest eines dieser Räder mit einer Antriebseinrichtung wirkverbunden oder wirkverbindbar ist, um das zumindest eine der Räder für die Vorschub-, Rückzugs- und Spannbewegung in eine Rotationsbewegung um eine Rotationsachse zu versetzen,
wobei ein betätigbares Mittel, mit dem zumindest ein Rad (13, 113) eines Räderpaars der Vorschubeinrichtung (20) in einen Zustand schaltbar ist, in dem das Umreifungsband, ohne Übertragung einer motorischen Antriebsbewegung auf das Umreifungsband, in einer zur Bandvorschubbewegung entgegen gesetzten Richtung zwischen dem Räderpaar verschiebbar ist;
**dadurch gekennzeichnet, dass** zumindest eines der Räder (11) mit dem gleichen Antriebsmotor (14) in beide Drehrichtungen antreibbar ist.

2. Umreifungskopf nach Anspruch 1,
**dadurch gekennzeichnet, dass** das Mittel eine Lüfteinrichtung (180) umfasst, mittels der die zwei als Räderpaar angeordnete Räder, zwischen denen das Umreifungsband zur Bewegungsübertragung klemmbar ist und von denen ein Rad motorisch antreibbar ist, temporär in einem Abstand zueinander anordenbar sind, der eine Bewegung, insbesondere eine freie Bewegung, des Umreifungsbands zwischen den beiden Rädern in einer zur Bandvorschubbewegung (32) entgegen gesetzten Richtung ermöglicht.

3. Umreifungskopf nach einem der vorhergehenden Ansprüche, **dadurch gekennzeichnet, dass** das Räderpaar zur Aufbringung der Bandvorschubbewegung auf das Umreifungsband und zur Aufbringung der Bandrückzugsbewegung auf das Umreifungsband vorgesehen ist.

4. Umreifungskopf nach einem der vorhergehenden Ansprüche, **gekennzeichnet durch** Mittel, mit denen die Lufteinrichtung (180) in Abhängigkeit von einer Position des Bandanfangs des Umreifungsbands bei der Bildung einer Bandschlaufe betätigbar ist.

5. Umreifungskopf nach einem der vorhergehenden Ansprüche, **gekennzeichnet durch** ein Detektionsmittel, mit dem das Erreichen einer bestimmten Position des Bandanfangs bei der Bandschlaufenbildung detektiert wird und aufgrund dieser Detektierung von einer Steuerung des Umreifungskopfs (5) die Lüfteinrichtung (180) betätigbar ist.

6. Umreifungskopf nach Anspruch 5, **gekennzeichnet durch** einen aufgrund einer Betätigung der Lüfteinrichtung (180) erzielbaren Abstand zwischen den Umfangsflächen der beiden Räder (11, 13; 12, 13; 111, 113; 112, 113), aus einem Bereich vom 1,5-fachen bis 10-fachen der Banddicke, vorzugsweise aus einem Bereich vom 2-fachen bis 8-fachen der Banddicke und besonders bevorzugt aus einem Bereich vom 3-fachen bis 7-fachen der Banddicke.

7. Umreifungskopf nach einem der vorhergehenden Ansprüche, **dadurch gekennzeichnet, dass** das eine Rad (11, 12, 13; 111, 112, 113) des Räderpaars auf einem Exzenter (50, 150) angeordnet und mit dem betätigbaren Mittel eine Drehbewegung des Exzenters (50, 150) in einer ersten Drehrichtung ausführbar ist, wodurch sich ein Abstand der beiden Räder (11, 13; 12, 13; 111, 113; 112, 113) des Räderpaars vergrössert.

8. Umreifungskopf nach Anspruch 7, **dadurch gekennzeichnet, dass** der Exzenter (50, 150) nach der Drehbewegung in die erste Drehrichtung nachfolgend in einer zweiten Drehrichtung drehbar angeordnet ist, um den Abstand der Räder (11, 13; 12, 13; 111, 113; 112, 113) des Räderpaars wieder zu verringern.

9. Umreifungskopf nach einem der vorhergehenden Ansprüche, **dadurch gekennzeichnet, dass** das Mittel ein Kupplungsmittel zur Trennung einer Wirkverbindung von einem der Räder (11, 12, 13; 111, 112, 113) des Räderpaars von seinem Antriebs umfasst, durch welche das Rad (11, 12, 13; 111, 112, 113) frei um seine Rotationsachse drehbar ist.

10. Umreifungskopf nach einem der vorhergehenden Ansprüche, **dadurch gekennzeichnet, dass** zum Kontakt mit dem Umreifungsband bei der Ausführung der Vorschub-, Rückzugs- und Spannbewegung insgesamt höchstens drei Räder (11, 12, 13; 111, 112, 113) am Umreifungskopf (5) vorgesehen sind, die im Zusammenhang mit diesen Funktionen mit dem Umreifungsband in Kontakt kommen, die höchstens drei Räder (11, 12, 13; 111, 112, 113) in unterschiedlichen Kombinationen miteinander jeweils paarweise auf beiden Seiten des Umreifungsbands in Anlage gegen das Umreifungsband bringbar sind.

11. Umreifungskopf nach Anspruch 10, **dadurch gekennzeichnet, dass** zumindest eines der drei Räder (11, 12, 13; 111, 112, 113), vorzugsweise nur eines der drei Räder (11, 12, 13; 111, 112, 113), abwechselnd in Richtung auf jeweils eines der beiden anderen Räder bewegbar ist, um in einer Bewegungsendposition zusammen mit dem jeweils einen anderen Rad gegen das Band anzuliegen, wobei das bewegbare Rad zur Ausführung von Schwenkbewegungen, insbesondere von angetriebenen Schwenkbewegungen, vorgesehen ist, frei um seine Drehachse drehbar angeordnet ist und zur Ausführungen seiner Bewegung in Richtung auf eine der beiden Rädern mit einem Antrieb wirkverbunden ist.

12. Umreifungskopf nach einem der vorhergehenden Ansprüche, **dadurch gekennzeichnet, dass** ein erstes Rad als Spannrad (12, 112) der Spanneinrichtung und ein zweites Rad (11, 111) als gemeinsames Rad der Bandvorschub- und Bandrückzugseinrichtung (20, 21) ausgebildet ist, das erste und das zweite Rad (11, 111; 12, 112) mit einem gemeinsamen oder mit mehreren Antrieben zur Erzeugung von angetriebenen Rotationsbewegungen des ersten und des zweiten Rads wirkverbunden oder wirkverbindbar sind und das bezüglich ihrer Position bewegbare dritte Rad (13, 113) zwischen Anlagepositionen am ersten und am zweiten Rad angetriebenen bewegbar angeordnet ist.

13. Umreifungskopf nach einem der vorhergehenden Ansprüche, **dadurch gekennzeichnet, dass** das zumindest eine Rad (13, 113) eine mit einer Schwenkbewegung kombinierte exzentrische Bewegung ausführt.

14. Umreifungsvorrichtung mit einem Umreifungskopf nach einem der vorhergehenden Ansprüche, **dadurch gekennzeichnet, dass** für den Bandvorschub, den Bandrückzug sowie für die Aufbringung der Bandspannung auf die Bandschlaufe drei Räder (11, 12, 13; 111, 112, 113), insbesondere nur drei Räder (11, 12, 13; 111, 112, 113), vorgesehen sind, wobei ein erstes Rad (11, 111) in zwei unterschiedliche Drehrichtungen motorisch antreibbar ist und als Bandvorschub- sowie als Bandrückzugsrolle vorgesehen ist, ein zweites Rad, das als Spannrad (12, 113) vorgesehen ist, in zumindest eine Drehrichtung, vorzugsweise in beide Drehrichtungen, motorisch antreibbar ist, und das dritte Rad (13, 113), die vorzugsweise motorisch nicht rotatorisch um seine Drehachse angetrieben ist, als Gegenrad (13, 113) vorgesehen ist und abwechselnd gegen das erste Rad (11, 111) oder gegen das zweite Rad (12, 20 112) bewegbar ist, wobei mittels der Lüfteinrichtung (180) die Position des Gegenrads (13, 113) zur Erzeugung eines Spalts zwischen den Umfangsflächen des ersten Rads (11) und des Gegenrads (13, 113) zur freien Bewegung des Umreifungsbands zwischen dem ersten Rad (11, 111) und dem Gegenrad (13, 113) zur Bildung eines Spalts veränderbar und nachfolgend wieder an das erste Rad (11, 111) rückstellbar ist, insbesondere bevor das Gegenrad (13, 113) an das Spannrad (12, 112) zugestellt wird.

## Claims

1. Strapping head (5) or strapping device of a strapping apparatus (1) for the strapping of packaged articles with a strapping band, in particular with a plastics strapping band, which strapping head is equipped with an advancement and tensioning device (20, 22) which is equipped with multiple wheels (11, 12, 13; 111, 112, 113) for transmitting an advancement, retraction and tensioning movement to the strapping band, wherein at least one of said wheels is operatively connected or operatively connectable to a drive device in order to set the at least one of the wheels in rotational motion about an axis of rotation for the advancement, retraction and tensioning movement,
wherein an actuable means by which at least one wheel (13, 113) of a wheel pair of the advancement device (20) can be switched into a state in which the strapping band can be displaced between the wheel pair in a direction opposite to the band advancement movement, without a motor drive movement being transmitted to the strapping band; **characterized in that** at least one of the wheels (11) can be driven in both directions of rotation by means of the same drive motor (14).

2. Strapping head according to Claim 1,
**characterized in that** the means comprises a clearance-generating device (180) by way of which the two wheels which are arranged as a wheel pair and between which the strapping band can be clamped for the purposes of transmitting movement and of which one wheel can be driven by motor action can be temporarily arranged with a spacing to one another which permits a movement, in particular a free movement, of the strapping band between the two wheels in a direction opposite to the band advancement movement (32).

3. Strapping head according to either of the preceding claims, **characterized in that** the wheel pair is provided for imparting the band advancement movement to the strapping band and for imparting the band retraction movement to the strapping band.

4. Strapping head according to one of the preceding claims, **characterized by** means by which the clearance-generating device (180) can be actuated in a manner dependent on a position of the start of the strapping band during the formation of a band loop.

5. Strapping head according to one of the preceding claims, **characterized by** a detection means which is used to detect when the start of the band reaches a particular position during the band loop formation, and the clearance-generating device (180) can be actuated by a controller of the strapping head (5) on the basis of said detection.

6. Strapping head according to Claim 5, **characterized by** a spacing which can be realized between the circumferential surfaces of the two wheels (11, 13; 12, 13; 111, 113; 112, 113) owing to an actuation of the clearance-generating device (180), from a range from 1.5 times to 10 times the band thickness, preferably from a range from 2 times to 8 times the band thickness and particularly preferably from a range from 3 times to 7 times the band thickness.

7. Strapping head according to one of the preceding claims, **characterized in that** one wheel (11, 12, 13; 111, 112, 113) of the wheel pair is arranged on an eccentric (50, 150), and, by way of the actuable means, a rotational movement of the eccentric (50, 150) in a first direction of rotation can be realized, whereby a spacing of the two wheels (11, 13; 12, 13; 111, 113; 112, 113) of the wheel pair is increased.

8. Strapping head according to Claim 7, **characterized in that** the eccentric (50, 150) is arranged such that, following the rotational movement in the first direction of rotation, it can rotate in a second direction of rotation in order to reduce the spacing of the wheels (11, 13; 12, 13; 111, 113; 112, 113) of the wheel pair again.

9. Strapping head according to one of the preceding claims, **characterized in that** the means comprises a coupling means for severing an operative connection of one of the wheels (11, 12, 13; 111, 112, 113) of the wheel pair from its drive, as a result of which the wheel (11, 12, 13; 111, 112, 113) is freely rotatable about its axis of rotation.

10. Strapping head according to one of the preceding claims, **characterized in that**, for the contact with the strapping band during the execution of the advancement, retraction and tensioning movement, a total of at most three wheels (11, 12, 13; 111, 112, 113) are provided on the strapping head (5), which wheels come into contact with the strapping band in conjunction with said functions, the at most three wheels (11, 12, 13; 111, 112, 113) can, in each case pairwise in different combinations with one another, be placed in contact with the strapping band on both sides of the strapping band.

11. Strapping head according to Claim 10, **characterized in that** at least one of the three wheels (11, 12, 13; 111, 112, 113), preferably only one of the three wheels (11, 12, 13; 111, 112, 113), can be moved alternately in the direction of in each case one of the two other wheels in order, in a movement end position, to bear together with the in each case one other wheel against the band, wherein the movable wheel is provided for performing pivoting movements, in particular driven pivoting movements, is arranged so as to be freely rotatable about its axis of rotation and is operatively connected to a drive for the purposes of performing its movement in the direction of one of the two wheels.

12. Strapping head according to one of the preceding claims, **characterized in that** a first wheel is formed as a tensioning wheel (12, 112) of the tensioning device and a second wheel (11, 111) is formed as a common wheel of the band advancement and band retraction device (20, 21), the first and the second wheel (11, 111; 12, 112) are operatively connected or operatively connectable to a common drive or to multiple drives for the purposes of generating driven rotational movements of the first and of the second wheel, and the third wheel (13, 113), which is movable in terms of its position, is arranged so as to be movable in driven fashion between positions of contact with the first and with the second wheel.

13. Strapping head according to one of the preceding claims, **characterized in that** the at least one wheel (13, 113) performs an eccentric movement combined with a pivoting movement.

14. Strapping apparatus having a strapping head according to one of the preceding claims, **characterized in that** three wheels (11, 12, 13; 111, 112, 113), in particular only three wheels (11, 12, 13; 111, 112, 113), are provided for the band advancement, the band retraction and for the application of the band tension to the band loop, wherein a first wheel (11, 111) can be driven by motor means in two different directions of rotation and is provided as a band advancement and band retraction wheel, a second wheel which is provided as a tensioning wheel (12, 112) can be driven by motor means in at least one direction of rotation, preferably in both directions of rotation, and the third wheel (13, 113), which is preferably not driven in rotation about its axis of rotation by motor means, is provided as a counterpart wheel (13, 113) and can be moved alternately against the first wheel (11, 111) or against the second wheel (12, 112), wherein, by way of the clearance-generating device (180), the position of the counterpart wheel (13, 113) can be varied for the purposes of generating a gap between the circumferential surfaces of the first wheel (11) and of the counterpart wheel (13, 113) for the free movement of the strapping band between the first wheel (11, 111) and the counterpart wheel (13, 113) for the purposes of forming a gap, and can subsequently be restored against the first wheel (11, 111) again, in particular before the counterpart wheel (13, 113) is moved against the tensioning wheel (12, 112).

## Revendications

1. Tête de cerclage (5), ou élément de cerclage, d'un dispositif de cerclage (1) permettant de cercler des produits emballés à l'aide d'une bande de cerclage, en particulier d'une bande de cerclage en matière plastique, qui est munie d'un élément d'avance et d'un élément de tensionnement (20, 22) qui sont équipés de plusieurs roues (11, 12, 13 ; 111, 112, 113) pour transférer un mouvement d'avance, de recul et de tensionnement sur la bande de cerclage, dans laquelle au moins l'une de ces roues est ou peut être mise en liaison fonctionnelle avec un élément d'entraînement afin de mettre ladite au moins une des roues en mouvement de rotation autour d'un axe de rotation pour le mouvement d'avance, de recul et de tensionnement,
dans laquelle un moyen pouvant être actionné est prévu qui permet de commuter au moins une roue (13, 113) d'une paire de roues de l'élément d'avance (20) sur un état dans lequel la bande de cerclage, sans qu'aucun mouvement d'entraînement motorisé ne soit transmis à la bande de cerclage, peut être déplacée entre la paire de roues dans une direction opposée au mouvement d'avance de bande ;
**caractérisée en ce qu'**au moins l'une des roues (11) peut être entraînée dans les deux sens de rotation par le même moteur d'entraînement (14).

2. Tête de cerclage selon la revendication 1, **caractérisée en ce que** le moyen comprend un élément pneumatique (180) au moyen duquel les deux roues disposées sous forme de paire de roues entre lesquelles la bande de cerclage peut être serrée pour la transmission de mouvement et dont une roue peut être entraînée par moteur, peuvent être disposées temporairement à une distance l'une par rapport à l'autre, qui permet un mouvement, en particulier un mouvement libre, de la bande de cerclage entre les deux roues dans une direction opposée au mouvement d'avance de bande (32).

3. Tête de cerclage selon l'une quelconque des revendications précédentes, **caractérisée en ce que** la paire de roues est prévue pour appliquer le mouvement d'avance de bande à la bande de cerclage et pour appliquer le mouvement de recul de bande à la bande de cerclage.

4. Tête de cerclage selon l'une quelconque des revendications précédentes, **caractérisée par** des moyens qui permettent d'actionner l'élément pneumatique (180) en fonction d'une position du début de bande de la bande de cerclage lorsqu'une boucle de bande est formée.

5. Tête de cerclage selon l'une quelconque des revendications précédentes, **caractérisée par** un moyen de détection par lequel l'arrivée à une certaine position du début de bande est détectée lorsqu'une boucle de bande est formée, et en raison de cette détection, l'élément pneumatique (180) peut être actionné par une unité de commande de la tête de cerclage (5).

6. Tête de cerclage selon la revendication 5, **caractérisée par** une distance entre les surfaces circonférentielles des deux roues (11, 13 ; 12, 13 ; 111, 113 ; 112, 113) qui peut être obtenue en raison d'un actionnement de l'élément pneumatique (180), dans une plage de 1,5 à 10 fois l'épaisseur de bande, de préférence dans une plage de 2 à 8 fois l'épaisseur de bande, et de manière particulièrement préférée dans une plage de 3 à 7 fois l'épaisseur de bande.

7. Tête de cerclage selon l'une quelconque des revendications précédentes, **caractérisée en ce que** ladite une roue (11, 12, 13 ; 111, 112, 113) de la paire de roues est disposée sur un excentrique (50, 150), et le moyen pouvant être actionné permet d'effectuer un mouvement de rotation de l'excentrique (50, 150) dans un premier sens de rotation, de sorte qu'une distance des deux roues (11, 13 ; 12, 13 ; 111, 113 ; 112, 113) de la paire de roues augmente.

8. Tête de cerclage selon la revendication 7, **caractérisée en ce que** l'excentrique (50, 150), après le mouvement de rotation dans le premier sens de rotation, est ensuite disposé de manière à pouvoir tourner dans un deuxième sens de rotation afin de réduire à nouveau la distance des roues (11, 13 ; 12, 13 ; 111, 113 ; 112, 113) de la paire de roues.

9. Tête de cerclage selon l'une quelconque des revendications précédentes, **caractérisée en ce que** le moyen comprend un moyen d'accouplement pour séparer une liaison fonctionnelle d'une des roues (11, 12, 13 ; 111, 112, 113) de la paire de roues de son dispositif d'entraînement qui permet à la roue (11, 12, 13 ; 111, 112, 113) de tourner librement autour de son axe de rotation.

10. Tête de cerclage selon l'une quelconque des revendications précédentes, **caractérisée en ce que** pour le contact avec la bande de cerclage lorsque le mouvement d'avance, de recul et de tensionnement est effectué, au total un maximum de trois roues (11, 12, 13 ; 111, 112, 113) est prévu sur la tête de cerclage (5), qui entrent en contact avec la bande de cerclage dans le cadre de ces fonctions, le maximum de trois roues (11, 12, 13 ; 111, 112, 113) pouvant être amené en différentes combinaisons les unes avec les autres respectivement par paires sur deux côtés de la bande de cerclage en appui sur la bande de cerclage.

11. Tête de cerclage selon la revendication 10, **caractérisée en ce qu'**au moins l'une des trois roues (11, 12, 13 ; 111, 112, 113), de préférence une seule des trois roues (11, 12, 13 ; 111, 112, 113), peut être déplacée en alternance en direction de respectivement l'une des deux autres roues pour être en appui avec respectivement une autre roue sur la bande dans une position de fin de mouvement, dans laquelle la roue mobile est prévue pour effectuer des mouvements pivotants, en particulier des mouvements pivotants entraînés, est disposée en pouvant tourner librement autour de son axe de rotation, et est en liaison fonctionnelle avec un dispositif d'entraînement pour effectuer son mouvement en direction d'une des deux roues.

12. Tête de cerclage selon l'une quelconque des revendications précédentes, **caractérisée en ce qu'**une première roue est réalisée comme roue de tensionnement (12, 112) de l'élément de tensionnement et une deuxième roue (11, 111) est réalisée comme roue commune de l'élément d'avance de bande et de l'élément de recul de bande (20, 21), la première et la deuxième roue (11, 111; 12, 112) sont ou peuvent être mises en liaison fonctionnelle avec un dispositif d'entraînement commun ou avec plusieurs dispositifs d'entraînement pour générer des mouvements de rotation entraînés de la première et de la deuxième roue, et la troisième roue (13, 113) mobile par rapport à leur position, est disposée de manière mobile entraînée entre des positions d'appui sur la première et la deuxième roue.

13. Tête de cerclage selon l'une quelconque des revendications précédentes, **caractérisée en ce que** ladite au moins une roue (13, 113) effectue un mouvement excentrique combiné avec un mouvement pivotant.

14. Dispositif de cerclage, comprenant une tête de cerclage selon l'une quelconque des revendications précédentes, **caractérisé en ce que** pour l'avance de bande, le recul de bande et pour l'application de la tension de bande sur la boucle de bande, trois roues (11, 12, 13 ; 111, 112, 113), en particulier trois roues (11, 12, 13 ; 111, 112, 113) seulement, sont prévues, dans lequel une première roue (11, 111) peut être entraînée par moteur dans deux sens de rotation différents et est prévue comme un rouleau d'avance de bande et un rouleau de recul de bande, une deuxième roue, qui est prévue comme roue de tensionnement (12, 112), peut être entraînée par moteur dans au moins un sens de rotation, de préférence dans les deux sens de rotation, et la troisième roue (13, 113), qui de préférence n'est pas entraînée par moteur en rotation autour de son axe de rotation, est prévue comme contre-roue (13, 113) et peut être déplacée en alternance contre la première roue (11, 111) ou contre la deuxième roue (12, 112), dans lequel, au moyen de l'élément pneumatique (180), la position de la contre-roue (13, 113) peut être modifiée pour générer un interstice entre les surfaces circonférentielles de la première roue (11) et de la contre-roue (13, 113) pour un mouvement libre de la bande de cerclage entre la première roue (11, 111) et la contre-roue (13, 113) pour former un interstice, et peut ensuite être ramenée à la première roue (11, 111), en particulier avant que la contre-roue (13, 113) ne soit rapprochée de la roue de tensionnement (12, 112).
